# EUROPÄISCHE PATENTSCHRIFT

(11) **EP 3 219 695 B1**
(45) Veröffentlichungstag und Bekanntmachung des Hinweises auf die Patenterteilung: **17.07.2019**
(21) Anmeldenummer: 17164600.3
(22) Anmeldetag: 25.01.2013
(51) Int. Cl.: C04B 38/00, F01N 3/28, F01N 3/02

(54) **VERFAHREN ZUM HERSTELLEN EINES KATALYSATOR-STRÖMUNGSKÖRPERS UND KATALYSATOR-STRÖMUNGSKÖRPER**
METHOD FOR PRODUCING A CATALYST FLOW BODY AND CATALYST FLOW BODY
PROCÉDÉ DE FABRICATION D'UN CORPS D'ÉCOULEMENT DE CATALYSEUR ET CORPS D'ÉCOULEMENT DE CATALYSEUR

(30) Priorität: 27.01.2012 DE 102012100687; 17.09.2012 DE 102012108698
(43) Veröffentlichungstag der Anmeldung: 20.09.2017
(62) Teilanmeldung aus: 13702010.3
(73) Patentinhaber: Hug Engineering AG, 8352 Elsau (CH)
(72) Erfinder: HUG, Christoph, 8542 Wiesendangen (CH); HUG, Hans Thomas, 8484 Weisslingen (CH)
(74) Vertreter: Hoeger, Stellrecht & Partner Patentanwälte mbB

(56) Entgegenhaltungen:
- WO-A1-03/069138
- WO-A1-2008/121390
- DE-U1-202004 018 812
- US-B1- 6 190 624

## Beschreibung

Die vorliegende Offenbarung betrifft ein Verfahren zum Herstellen eines Katalysator-Strömungskörpers.

Ein Katalysator-Strömungskörper kann beispielsweise zur Umwandlung von Schadstoffen in weniger gesundheits- und/oder umweltschädliche Stoffe verwendet werden. Insbesondere kann ein solcher Katalysator-Strömungskörper in einem Abgasstrang einer Wärmekraftmaschine Verwendung finden. Hierbei kann der Katalysator-Strömungskörper hohen thermischen und/oder mechanischen Belastungen ausgesetzt sein, wodurch seine Zuverlässigkeit und Haltbarkeit beeinträchtigt werden kann. Ein Strömungskörper ist beispielsweise aus der WO 2008/121390 A1 bekannt.

Der vorliegenden Offenbarung liegt die Aufgabe zugrunde, ein Verfahren zum Herstellen eines Katalysator-Strömungskörpers bereitzustellen, mittels welchem robust ausgebildete und in einem breiten Betriebsbereich einsetzbare Katalysator-Strömungskörper herstellbar sind.

Diese Aufgabe wird gemäß der Offenbarung dadurch gelöst, dass bei einem Verfahren zum Herstellen eines Katalysator-Strömungskörpers folgende Verfahrensschritte durchgeführt werden:
- Bereitstellen eines Grundkörpers, welcher eine Mehrzahl von Strömungskanälen umfasst;
- Einbringen von Aussparungen in Trennwände des Grundkörpers, welche die Strömungskanäle voneinander trennen, so dass mindestens zwei benachbarte Strömungskanäle in einem gemeinsamen Endbereich der mindestens zwei benachbarten Strömungskanäle innerhalb des Grundkörpers fluidwirksam miteinander verbunden sind;
- Anordnen von Kanalverschlüssen im gemeinsamen Endbereich zum fluiddichten Verschluss des gemeinsamen Endbereichs unter Erhalt der fluidwirksamen Verbindung zwischen den mindestens zwei benachbarten Strömungskanälen in dem gemeinsamen Endbereich.

Dadurch, dass bei dem Verfahren zum Herstellen eines Katalysator-Strömungskörpers Aussparungen und Kanalverschlüsse vorgesehen sind, mittels welchen benachbarte Strömungskanäle fluidwirksam miteinander verbunden und vorzugsweise gegen eine Umgebung des Katalysator-Strömungskörpers abgedichtet werden können, kann ein Katalysator-Strömungskörper mit vorteilhafter Strömungsführung, insbesondere vorteilhaftem Durchströmungsweg, hergestellt werden, welcher einen Einsatz in einem breiten Betriebsbereich ermöglicht und robust ausgebildet ist.

Strömungskanäle sind insbesondere lineare, im Wesentlichen parallel zueinander verlaufende und/oder zumindest vor dem Einbringen von Kanalverschlüssen beidseitig offene Hohlräume in dem Grundkörper des Katalysator-Strömungskörpers.

Vorzugsweise sind zumindest näherungsweise sämtliche Strömungskanäle im Wesentlichen identisch ausgebildet. Insbesondere kann vorgesehen sein, dass im Wesentlichen sämtliche Strömungskanäle zumindest näherungsweise identische Abmessungen aufweisen.

Aussparungen in den Trennwänden des Grundkörpers können beispielsweise als Einbuchtungen ausgebildet sein.

Vorteilhaft kann es sein, wenn der Grundkörper in einem Extrusionsverfahren hergestellt wird.

Insbesondere kann vorgesehen sein, dass der Grundkörper aus einem plastischen keramischen Material hergestellt wird.

Als Ausgangsmaterial für den Grundkörper kann beispielsweise ein Cordieritmaterial, welches Cordierit umfasst, vorgesehen sein.

Die Trennwände sind vorzugsweise im Wesentlichen gasundurchlässig.

Günstig kann es sein, wenn der Grundkörper in einem Extrusionsverfahren seine Grundform und/oder eine vorgegebene Länge erhält.

Es kann vorgesehen sein, dass der Grundkörper in einem Gefriertrocknungsverfahren getrocknet wird.

Ferner kann vorgesehen sein, dass der Grundkörper abgelängt wird.

Ferner kann vorgesehen sein, dass der Grundkörper weiterverarbeitet wird.

Vorzugsweise wird der Grundkörper nach dem Extrudiervorgang abgeschnitten, gefriergetrocknet, abgelängt und dann weiterverarbeitet.

Unter einem Weiterverarbeiten ist insbesondere ein Einbringen von Aussparungen zu verstehen.

Günstig kann es sein, wenn vor dem Einbringen der Aussparungen mittels einer Bildaufnahmevorrichtung und einer Bildauswertungsvorrichtung die Positionen der Trennwände ermittelt werden.

Insbesondere kann hierdurch ermittelt werden, in welche Trennwände Aussparungen eingebracht werden, um benachbarte Strömungskanäle fluidwirksam miteinander zu verbinden.

Vorzugsweise werden nur vereinzelte Aussparungen in die Trennwände eingebracht, insbesondere derart, dass vorzugsweise stets nur zwei Strömungskanäle auf einer Seite des Grundkörpers fluidwirksam miteinander verbunden sind.

Günstig kann es sein, wenn die Aussparungen und/oder die Kanalverschlüsse gemäß einem regelmäßigen Muster in den Grundkörper eingebracht bzw. an dem Grundkörper angeordnet werden. Auf diese Weise kann eine gleichmäßige Durchströmung des Katalysator-Strömungskörpers mit einem Gasstrom ermöglicht werden.

Insbesondere kann vorgesehen sein, dass die Aussparungen und/oder die Kanalverschlüsse in einem vorgegebenen Schema, beispielsweise zumindest abschnittsweise schachbrettartig, in den Grundkörper eingebracht bzw. an dem Grundkörper angeordnet werden.

Bei einer Ausgestaltung der Offenbarung ist vorgesehen, dass die Aussparungen und/oder die Kanalverschlüsse so in den Grundkörper eingebracht bzw. an dem Grundkörper angeordnet werden, dass horizontal benachbarte Strömungskanäle und vertikal benachbarte Strömungskanäle im Betrieb des Katalysator-Strömungskörpers in einander entgegengesetzten Durchströmungsrichtungen durchströmt werden. Auf diese Weise kann ein Wärmeübertrag innerhalb des Katalysator-Strömungskörpers optimiert werden.

Unter einem Betrieb des Katalysator-Strömungskörpers ist in dieser Beschreibung und den beigefügten Ansprüchen insbesondere ein Durchströmen des Katalysator-Strömungskörpers mit einem schadstoffhaltigen Gasstrom, insbesondere mit Abgas einer Verbrennungsvorrichtung, zu verstehen.

Die Anordnung der Aussparungen und Kanalverschlüsse derart, dass horizontal benachbarte Strömungskanäle und vertikal benachbarte Strömungskanäle im Betrieb des Katalysator-Strömungskörpers in einander entgegengesetzten Strömungsrichtungen durchströmt werden, ermöglicht insbesondere eine Wärmeübertragung in horizontaler und vertikaler Richtung.

Unter horizontal benachbarten Strömungskanälen sind in dieser Beschreibung und den beigefügten Ansprüchen Strömungskanäle zu verstehen, welche bei einer horizontalen Durchströmung des Grundkörpers in horizontaler Richtung und senkrecht zur Durchströmungsrichtung benachbart zueinander angeordnet sind.

Unter vertikal benachbarten Strömungskanälen sind in dieser Beschreibung und den beigefügten Ansprüchen Strömungskanäle zu verstehen, welche bei horizontaler Durchströmung des Grundkörpers in vertikaler Richtung und senkrecht zur Durchströmungsrichtung benachbart zueinander angeordnet sind.

Die Aussparungen werden beispielsweise mittels einer Fräsvorrichtung, insbesondere einer computergesteuerten Fräsvorrichtung, in die Trennwände des Grundkörpers eingebracht.

Insbesondere kann vorgesehen sein, dass die Aussparungen vor der Durchführung eines Brennvorgangs des Grundkörpers in den Grundkörper eingebracht werden.

Ein Fräskopf der Fräsvorrichtung weist vorzugsweise einen Durchmesser auf, welcher im Wesentlichen der Breite, insbesondere dem Durchmesser, der Strömungskanäle entspricht.

Mittels der Bildaufnahmevorrichtung und der Bildauswertungsvorrichtung wird vorzugsweise eine Position der mit Aussparungen zu versehenden Trennwände ermittelt. Mittels der Fräsvorrichtung können die Aussparungen dann insbesondere automatisiert und mit hoher Genauigkeit in die Trennwände eingebracht werden.

Die Aussparungen weisen vorzugsweise eine Tiefe auf, welche es ermöglicht, dass eine Fluidverbindung zwischen benachbarten Strömungskanälen auch nach der Anordnung der Kanalverschlüsse erhalten bleibt. Insbesondere kann vorgesehen sein, dass die Aussparungen eine Tiefe aufweisen, welche der Summe aus der Dicke des Kanalverschlusses und der Breite des Strömungskanals, insbesondere des Durchmessers des Strömungskanals, entspricht.

Durch die Verwendung einer Bildaufnahmevorrichtung und einer Bildauswertungsvorrichtung, insbesondere einer Bildverarbeitungsvorrichtung, kann der Grundkörper besonders exakt bearbeitet werden, insbesondere um Fertigungsunterschiede einzelner Grundkörper berücksichtigen zu können.

Vorteilhaft kann es sein, wenn der Grundkörper auf beiden Seiten mit Aussparungen und Kanalverschlüssen versehen wird.

Insbesondere kann vorgesehen sein, dass der Grundkörper auf einander gegenüberliegenden Seiten, insbesondere auf einer Eintrittseite und einer Austrittseite, mit Aussparungen und Kanalverschlüssen versehen wird. Hierdurch kann eine einfache räumliche Trennung der in den Grundkörper einströmenden Gasströme von den aus dem Grundkörper ausströmenden Gasströmen erfolgen.

Günstig kann es sein, wenn jeweils drei Strömungskanäle mittels jeweils zweier Aussparungen, welche an einander gegenüberliegenden Endbereichen der Strömungskanäle angeordnet sind, fluidwirksam miteinander verbunden werden.

Auf diese Weise kann ein sogenannter "Dreierverbund" erzeugt werden.

Ein Durchströmungsweg des Grundkörpers ist dann vorzugsweise aus drei Strömungskanälen gebildet, wobei auf einer ersten Seite des Grundkörpers, nämlich der Eintrittseite des Grundkörpers, ein erster Strömungskanal offen ausgebildet ist, während ein zweiter und ein dritter Strömungskanal mittels Kanalverschlüssen abgedeckt sind. Auf der der ersten Seite gegenüberliegenden zweiten Seite, nämlich der Austrittseite des Grundkörpers, ist dann vorzugsweise der dritte Strömungskanal offen ausgebildet, während der erste Strömungskanal und der zweite Strömungskanal mittels Kanalverschlüssen verschlossen sind.

Der erste Strömungskanal und der zweite Strömungskanal sind dann vorzugsweise mittels einer Aussparung im Bereich der Austrittseite fluidwirksam miteinander verbunden, so dass eine erste Strömungsumlenkung gebildet ist.

Der zweite Strömungskanal und der dritte Strömungskanal sind ferner vorzugsweise im Bereich der Eintrittseite mittels einer Aussparung fluidwirksam miteinander verbunden, so dass eine zweite Strömungsumlenkung gebildet ist.

Ein durch eine Eintrittsöffnung in den Grundkörper einströmender Gasstrom strömt dabei vorzugsweise längs des ersten Strömungskanals von der Eintrittseite zu der Austrittseite, wird über die Strömungsumlenkung auf der Austrittseite und längs des zweiten Strömungskanals zurück zur Eintrittseite geführt, dort mittels der weiteren Strömungsumlenkung erneut umgelenkt und schließlich über den dritten Strömungskanal zur Austrittseite und dort durch eine Austrittsöffnung aus dem Grundkörper herausgeführt.

Der Grundkörper und/oder der Katalysator-Strömungskörper können grundsätzlich jede beliebige Form, insbesondere beliebige Wabenformen, aufweisen. Beispielsweise kann vorgesehen sein, dass der Grundkörper und/oder der Katalysator-Strömungskörper und/oder Waben des Grundkörpers bzw. des Katalysator-Strömungskörpers zylindrisch mit rechteckigem, insbesondere quadratischem, rundem, ovalem, etc. Querschnitt sind.

Je nach Herstellung oder Bearbeitung des Katalysator-Strömungskörpers und/oder des Grundkörpers kann die Form insbesondere in Randbereichen von der optimalen Form und/oder von einem geometrischem Muster, insbesondere der Wabenform, abweichen.

Vorzugsweise ist der Grundkörper ein Wabenkörper mit im Wesentlichen quadratischem Querschnitt und mit Waben, welche matrixförmig in einem quadratischen Muster angeordnet sind und einen im Wesentlichen quadratischen Querschnitt aufweisen.

Der Grundkörper weist somit vorzugsweise Spalten und Zeilen aus Strömungskanälen auf.

Vorteilhaft kann es sein, wenn die Aussparungen so in den Grundkörper eingebracht und die Kanalverschlüsse so an dem Grundkörper angeordnet werden, dass die Strömungskanäle jeder dritten Spalte oder jeder dritten Zeile von Strömungskanälen beidseitig mit Kanalverschlüssen versehen sind.

Vorzugsweise sind die beidseitig mit Kanalverschlüssen versehenen Strömungskanäle solche Strömungskanäle, welche beidseitig mit weiteren Strömungskanälen fluidwirksam verbunden sind.

Vorteilhaft kann es sein, wenn der Grundkörper gebrannt wird. Hierdurch erhält der Grundkörper eine hohe Festigkeit.

Insbesondere kann vorgesehen sein, dass der Grundkörper nach dem Einbringen der Aussparungen gebrannt wird.

Beispielsweise kann vorgesehen sein, dass der Grundkörper in einem Sinterschritt gebrannt wird.

Der Grundkörper kann beispielsweise auf mindestens ungefähr 1000 °C, beispielsweise auf mindestens ungefähr 1200 °C, insbesondere auf ungefähr 1300 °C, erhitzt werden.

Günstig kann es sein, wenn der Grundkörper mit einer katalytischen Beschichtung versehen wird. Auf diese Weise können chemische Reaktionen, welche beim Durchströmen des Katalysator-Strömungskörpers in dem Grundkörper stattfinden, gezielt beeinflusst, insbesondere beschleunigt, werden.

Der Grundkörper wird vorzugsweise innenbeschichtet, so dass die Trennwände des Grundkörpers mit der katalytischen Beschichtung beschichtet sind.

Es kann vorgesehen sein, dass der Grundkörper durch Eintauchen in eine edelmetallhaltige flüssige Masse mit einer katalytischen Beschichtung versehen wird.

Der Grundkörper wird vorzugsweise nach dem Einbringen der Aussparungen und/oder nach dem Durchführen eines Brennvorgangs und/oder vor der Anordnung der Kanalverschlüsse mit einer katalytischen Beschichtung versehen.

Vorteilhaft kann es sein, wenn der Grundkörper nach dem Durchführen des Beschichtungsvorgangs getrocknet und/oder kalziniert wird. Der Grundkörper kann hierzu insbesondere erhitzt werden, beispielsweise auf eine Temperatur von ungefähr 400 °C erhitzt werden.

Bei einer Ausgestaltung der Offenbarung ist vorgesehen, dass zum Anordnen der Kanalverschlüsse der Grundkörper mit einer Maske versehen wird.

Eine Maske kann beispielsweise eine Folie umfassen, welche eine Eintrittseite oder eine Austrittseite des Grundkörpers vorzugsweise zunächst vollständig abdeckt.

Mittels einer Bildaufnahmevorrichtung und/oder einer Bildauswertungsvorrichtung wird vorzugsweise ermittelt, an welchen Stellen die Maske mit Öffnungen versehen werden muss, um die Kanalverschlüsse an den korrekten Positionen an dem Grundkörper anordnen zu können.

Mittels einer Bearbeitungsvorrichtung, beispielsweise einer Laservorrichtung, kann die Maske dann mit Öffnungen versehen werden, insbesondere an denjenigen Stellen, welche als korrekte Positionen mittels der Bildaufnahmevorrichtung und/oder der Bildauswertungsvorrichtung ermittelt wurden.

Die Öffnungen in der Maske werden vorzugsweise an denjenigen Strömungskanälen erzeugt, bei denen Aussparungen in den Trennwänden vorgesehen sind.

Die Öffnungen werden vorzugsweise so dimensioniert, dass die offenen Enden von mittels Aussparungen mit weiteren Strömungskanälen verbundenen Strömungskanälen sowie die Aussparungen selbst frei liegen.

Günstig kann es sein, wenn bei der Anordnung der Kanalverschlüsse die Strömungskanäle teilweise mittels eines plastischen Materials gefüllt werden.

Insbesondere kann vorgesehen sein, dass die Strömungskanäle durch das teilweise Füllen derselben mit einem plastischen Material mit Kanalverschlüssen versehen werden.

Die Strömungskanäle werden vorzugsweise ausgehend von einer äußeren Oberfläche des Grundkörpers so weit gefüllt, dass die Dicke der Kanalverschlüsse im Wesentlichen dem Durchmesser der Strömungskanäle entspricht.

Das plastische Material wird vorzugsweise durch die Maske, insbesondere durch die Öffnungen in der Maske, gefördert, insbesondere gepresst.

Die Kanalverschlüsse sind somit insbesondere Stopfen, welche die zuvor offenen Enden der Strömungskanäle abdichten.

Das Material der Kanalverschlüsse kann vorzugsweise umgewandelt werden.

Beispielsweise kann vorgesehen sein, dass der Grundkörper zusammen mit dem in die Strömungskanäle eingebrachten plastischen Material erhitzt wird, um die Kanalverschlüsse zu verfestigen.

Günstig ist es, wenn die Kanalverschlüsse durch Erhitzen mit dem Grundkörper verbunden werden.

Beispielsweise kann vorgesehen sein, dass die Kanalverschlüsse durch Erhitzen mit dem Grundkörper stoffschlüssig mit dem Grundkörper verbunden werden.

Der Grundkörper und die Kanalverschlüsse werden hierzu vorzugsweise über eine Quarzsprungtemperatur des Materials des Grundkörpers, beispielsweise auf mindestens ungefähr 450 °C, insbesondere auf ungefähr 500 °C, erhitzt.

Vorzugsweise wird der Grundkörper mit den Kanalverschlüssen auf höchstens ungefähr 700 °C, insbesondere auf höchstens ungefähr 600 °C erhitzt, um eine gegebenenfalls vorhandene katalytische Beschichtung nicht zu beschädigen.

Es kann vorgesehen sein, dass mehrere Grundkörper miteinander verbunden, insbesondere verklebt, werden, um einen Verbund aus mehreren Grundkörpern beliebiger Größe herstellen zu können.

Um den Verbund aus mehreren Grundkörpern in eine vorgegebene Form zu bringen, kann dieser Verbund beispielsweise in Form gesägt werden.

Die vorliegende Erfindung betrifft auch einen Katalysator-Strömungskörper.

Der Erfindung liegt diesbezüglich die Aufgabe zugrunde, einen Katalysator-Strömungskörper bereitzustellen, welcher robust ausgebildet und in einem breiten Betriebsbereich einsetzbar ist.

Diese Aufgabe wird erfindungsgemäß dadurch gelöst, dass der Katalysator-Strömungskörper einen Grundkörper umfasst, welcher Folgendes umfasst:
- eine Eintrittseite, auf welcher ein Fluidstrom in den Grundkörper einströmen kann;
- eine der Eintrittseite gegenüberliegende Austrittseite, auf welcher der Fluidstrom aus dem Grundkörper austreten kann; und
- eine Mehrzahl von die Eintrittseite mit der Austrittseite verbindenden mäanderförmigen Durchströmungswegen.

Die vorliegende Aufgabe wird ferner durch einen wie vorstehend beschriebenen Katalysator-Strömungskörper gelöst, welcher einen Grundkörper umfasst, der Folgendes umfasst:
- eine Mehrzahl von Strömungskanälen;
- Aussparungen in Trennwänden des Grundkörpers, welche die Strömungskanäle voneinander trennen, so dass mindestens zwei benachbarte Strömungskanäle in einem gemeinsamen Endbereich der mindestens zwei benachbarten Strömungskanäle innerhalb des Grundkörpers fluidwirksam miteinander verbunden sind; und
- Kanalverschlüsse im gemeinsamen Endbereich zum fluiddichten Verschluss des gemeinsamen Endbereichs unter Erhalt der fluidwirksamen Verbindung zwischen den mindestens zwei benachbarten Strömungskanälen in dem gemeinsamen Endbereich, wobei sämtliche Eintrittsöffnungen des Katalysator-Strömungskörpers auf der Eintrittseite und sämtliche Austrittsöffnungen des Katalysator-Strömungskörpers auf der Austrittseite angeordnet sind, wobei die Aussparungen so verteilt an dem Grundkörper angeordnet sind, dass
   a) auf einer Seite des Grundkörpers jeweils zwei Strömungskanäle mittels jeweils einer Aussparung fluidwirksam miteinander verbunden sind; und
   b) auf einer Seite des Grundkörpers jeweils ein Paar von mittels einer Aussparung fluidwirksam miteinander verbundenen Strömungskanälen von vier direkt an das Paar von Strömungskanälen angrenzenden Strömungskanälen umgeben ist, welche auf dieser Seite des Grundkörpers nicht mit weiteren Strömungskanälen fluidwirksam verbunden sind.

Derartige Katalysator-Strömungskörper können besonders robust ausgebildet und in einem breiten Betriebsbereich einsetzbar sein.

Ein erfindungsgemäßer Katalysator-Strömungskörper kann einzelne oder mehrere der vorstehend im Zusammenhang mit dem Verfahren gemäß der Offenbarung zum Herstellen eines Katalysator-Strömungskörpers beschriebenen Merkmale und/oder Vorteile aufweisen.

Vorzugsweise weist ein Durchströmungsweg des Katalysator-Strömungskörpers mindestens zwei Strömungsumlenkungen auf.

Günstig kann es sein, wenn die Durchströmungswege des Katalysator-Strömungskörpers exakt zwei Strömungsumlenkungen pro Durchströmungsweg aufweisen.

Günstig kann es sein, wenn die Aussparungen und/oder die Kanalverschlüsse gemäß einem regelmäßigen Muster, insbesondere gemäß einem vorgegebenen Schema, insbesondere zumindest abschnittsweise schachbrettartig, an dem Grundkörper angeordnet sind.

Vorteilhaft kann es sein, wenn die Aussparungen und/oder die Kanalverschlüsse so an dem Grundkörper angeordnet sind, dass horizontal benachbarte Strömungskanäle und vertikal benachbarte Strömungskanäle im Betrieb des Katalysator-Strömungskörpers in einander entgegengesetzten Durchströmungsrichtungen durchströmt werden.

Ein Durchmesser der Fluidverbindung zwischen zwei mittels Aussparungen miteinander verbundenen Strömungskanälen entspricht vorzugsweise im Wesentlichen der Breite der Strömungskanäle, insbesondere dem Durchmesser der Strömungskanäle.

Die Aussparungen sind erfindungsgemäß so verteilt an dem Grundkörper des Katalysator-Strömungskörpers angeordnet, dass auf einer Seite des Grundkörpers jeweils zwei Strömungskanäle mittels jeweils einer Aussparung fluidwirksam miteinander verbunden sind.

Erfindungsgemäß ist vorgesehen, dass die Aussparungen so verteilt an dem Grundkörper des Katalysatorkörpers angeordnet sind, dass auf einer Seite des Grundkörpers stets nur jeweils zwei Strömungskanäle mittels jeweils einer Aussparung fluidwirksam miteinander verbunden sind.

Erfindungsgemäß ist ferner vorgesehen, dass die Aussparungen so verteilt an dem Grundkörper angeordnet sind, dass auf einer Seite des Grundkörpers jeweils ein Paar von mittels einer Aussparung fluidwirksam miteinander verbundenen Strömungskanälen von vier direkt an das Paar von Strömungskanälen angrenzenden Strömungskanälen umgeben ist, welche auf dieser Seite des Grundkörpers nicht mit weiteren Strömungskanälen fluidwirksam verbunden sind. Auf diese Weise kann ein vorteilhafter Wärmeübertrag innerhalb des Katalysator-Strömungskörpers ermöglicht werden.

Der Grundkörper ist vorzugsweise auf beiden Seiten, insbesondere auf einer Eintrittseite und einer Austrittseite, mit Aussparungen und Kanalverschlüssen versehen. Hierdurch können insbesondere mäanderförmige Durchströmungswege ermöglicht werden, wobei Eintrittsöffnungen und Austrittsöffnungen des Katalysator-Strömungskörpers einander gegenüberliegend angeordnet sind, so dass in den Katalysator-Strömungskörper einströmendes Gas auf einer Eintrittseite besonders einfach von auf einer Austrittseite aus dem Katalysator-Strömungskörper ausströmendem Gas getrennt werden kann.

Vorzugsweise sind jeweils drei Strömungskanäle mittels jeweils zwei Aussparungen, welche an einander gegenüberliegenden Endbereichen der Strömungskanäle angeordnet sind, fluidwirksam miteinander verbunden.

Günstig kann es sein, wenn die Aussparungen und die Kanalverschlüsse so an dem Grundkörper angeordnet sind, dass die Strömungskanäle jeder dritten Spalte oder jeder dritten Zeile von Strömungskanälen beidseitig mit Kanalverschlüssen versehen sind.

Der Grundkörper umfasst vorzugsweise eine katalytische Beschichtung.

Das Verfahren gemäß der Offenbarung und/oder der erfindungsgemäße Katalysator-Strömungskörper weisen ferner vorzugsweise einzelne oder mehrere der nachfolgend in Verbindung mit weiteren Verfahren und/oder Vorrichtungen beschriebenen Merkmale und/oder Vorteile auf.

Ein erfindungsgemäßer Katalysator-Strömungskörper eignet sich vorzugsweise insbesondere zur Verwendung in einer Reinigungsvorrichtung zur Reinigung eines Rohgasstroms.

Die vorliegende Erfindung betrifft daher auch eine Reinigungsvorrichtung zur Reinigung eines Rohgasstroms, welche durch die Verwendung eines erfindungsgemäßen Katalysator-Strömungskörpers robust ausgebildet und in einem breiten Betriebsbereich einsetzbar ist.

Ein erfindungsgemäßer Katalysator-Strömungskörper eignet sich ferner zur Verwendung in einer Wärmekraftmaschine.

Die vorliegende Erfindung betrifft daher auch eine Wärmekraftmaschine, welche eine Verbrennungsvorrichtung, eine Turbinenvorrichtung und eine Abgasströmungsführung sowie einen erfindungsgemäßen Katalysator-Strömungskörper umfasst.

Vorzugsweise ist bei der erfindungsgemäßen Wärmekraftmaschine vorgesehen, dass mittels der Abgasströmungsführung aus der Verbrennungsvorrichtung abgeführtes Abgas zunächst durch den Katalysator-Strömungskörper hindurchführbar und anschließend der Turbinenvorrichtung zuführbar ist.

Günstig kann es sein, wenn die Verbrennungsvorrichtung als ein Verbrennungsmotor ausgebildet ist.

Die Turbinenvorrichtung ist vorzugsweise als eine Turboladervorrichtung ausgebildet.

Vorzugsweise ist der Katalysator-Strömungskörper somit zwischen einem Verbrennungsmotor und einer Turboladervorrichtung angeordnet. Der Wirkungsgrad der Wärmekraftmaschine kann hierdurch vorzugsweise erhöht werden. Ferner können hierdurch Emissionen aus unverbrannten Kohlenwasserstoffen vorzugsweise reduziert werden.

Die Verwendung eines erfindungsgemäßen Katalysator-Strömungskörpers zwischen dem Verbrennungsmotor und der Turboladervorrichtung ermöglicht insbesondere die Verwendung von Platin als Material für die katalytische Beschichtung, da die Temperaturen, welche insbesondere zur Oxidation von Methan notwendig sind (ungefähr 500°C) im Bereich zwischen dem Verbrennungsmotor und der Turboladervorrichtung vorkommen und der erfindungsgemäße Katalysator-Strömungskörper aufgrund der inneren Wärmeübertragung ein unerwünschtes Absinken der Temperatur unter die notwendige Temperatur wirksam verhindert. Insbesondere kann auf diese Weise auf die Verwendung von Palladiumbeschichtungen, welche stark schwefelempfindlich und teuer sind sowie geringe Lebensdauern aufweisen, verzichtet werden.

Der erfindungsgemäße Katalysator-Strömungskörper eignet sich daher insbesondere zur thermischen Umsetzung von Kohlenwasserstoffen.

Die vorliegende Erfindung betrifft daher auch die Verwendung eines Katalysator-Strömungskörpers zur thermischen Umsetzung von Kohlenwasserstoffen, insbesondere zur Oxidation von Methan.

Die Oxidation von Methan ist insbesondere bei großen Gasmotoren mit Leistungen größer als 1 MW besonders relevant.

Bei Gas-Otto-Motoren mit Leistungen bis ungefähr 1 MW kann eine stöchiometrische Verbrennung des Brenngases erfolgen (λ=1). Durch eine Reinigung des Abgases mittels eines Dreiwege-Katalysators kann ein Methanschlupf praktisch vollständig verhindert werden.

Aus thermischen Gründen ist für größere Gasmotoren eine solche Verbrennung jedoch unvorteilhaft. Vorzugsweise wird daher bei großen Gasmotoren verhältnismäßig weniger Brenngas zugeführt als zur stöchiometrischen Verbrennung (λ=1) notwendig wäre. Der Motor wird somit mit Luftüberschuss, insbesondere nahe der Zündgrenze, betrieben, was zur Folge haben kann, dass sich im Brennraum Bereiche bilden, in welchen ein Gemisch aus Luft und Brenngas nicht mehr innerhalb der Zündgrenzen liegt und somit keine Verbrennung erfolgt. Dies kann zu einem hohen Methanschlupfwert von beispielsweise ungefähr 500 bis 5000 ppm führen, was wiederum den Wirkungsgrad reduziert und umweltschädlich ist, da Methan als Treibhausgas ungefähr zwanzig- bis dreißigmal so wirksam ist wie Kohlenstoffdioxid. Ein Methanschlupf sollte daher auf 100 PPM oder weniger reduziert werden.

Da in dem erfindungsgemäßen Katalysator-Strömungskörper die während des Betriebs des Katalysator-Strömungskörpers freiwerdende Wärme zum Betrieb desselben wiederverwendet wird, kann der Katalysator-Strömungskörper auch als Rekuperationskatalysator bezeichnet werden.

Insbesondere bei der Verwendung als Voroxidationskatalysator zur thermischen Regeneration eines Dieselruß-Partikel-Filters kann ein erfindungsgemäßer Katalysator-Strömungskörper den Vorteil bieten, dass eine Zündtemperatur als Vorlauftemperatur nicht während des ganzen Regenerationsvorgangs gehalten werden muss. Hierdurch kann die thermische Beanspruchung reduziert und die Lebensdauer erhöht werden. Ferner kann hierdurch die Menge des als Katalysatormaterial verwendeten Edelmetalls reduziert werden.

Die erfindungsgemäße Reinigungsvorrichtung und/oder die erfindungsgemäße Wärmekraftmaschine weisen vorzugsweise einzelne oder mehrere der im Zusammenhang mit dem Verfahren gemäß der Offenbarung und/oder dem erfindungsgemäßen Katalysator-Strömungskörper beschriebenen Merkmale und/oder Vorteile auf.

Der erfindungsgemäße Katalysator-Strömungskörper ist insbesondere zur Verwendung in einem Verfahren zum Erhitzen eines Reinigungs-Strömungskörpers zur Reinigung eines Rohgasstroms geeignet.

Ein Reinigungs-Strömungskörper ist beispielsweise ein Partikelfilter, insbesondere ein Dieselruß-Partikel-Filter, und dient der Entfernung von Partikeln, insbesondere kohlenstoffhaltigen Rußpartikeln, aus einem Rohgasstrom, beispielsweise aus einem Abgasstrom eines Verbrennungsmotors. Da sich ein als Partikelfilter ausgebildeter Reinigungs-Strömungskörper nach einer gewissen Reinigungszeit mit Partikeln zusetzt, muss eine regelmäßige Reinigung des Reinigungs-Strömungskörpers durchgeführt werden. Dies kann beispielsweise durch ein so genanntes Freibrennen geschehen, bei welchem der Reinigungs-Strömungskörper so stark erhitzt wird, dass insbesondere kohlenstoffhaltige Substanzen verbrannt werden.

Bei einem vorteilhaften Verfahren zum Erhitzen eines Reinigungs-Strömungskörpers zur Reinigung eines Rohgasstroms werden vorzugsweise folgende Verfahrensschritte durchgeführt:
- Durchströmen eines vorzugsweise erfindungsgemäßen Katalysator-Strömungskörpers mit einem Gasstrom, wobei durch chemische Reaktionen von Bestandteilen des Gasstroms während des Durchströmens des Katalysator-Strömungskörpers Wärme entsteht, so dass sich der Katalysator-Strömungskörper längs mindestens eines Durchströmungsweges erhitzt und hierdurch mindestens ein stärker erhitzter Abschnitt des Katalysator-Strömungskörpers, welcher bezüglich mindestens eines Durchströmungsweges stromabwärts angeordnet ist, und mindestens ein weniger stark erhitzter Abschnitt des Katalysator-Strömungskörpers, welcher bezüglich mindestens eines Durchströmungsweges stromaufwärts angeordnet ist, gebildet werden;
- Verwenden von Wärme von mindestens einem stärker erhitzten Abschnitt des Katalysator-Strömungskörpers zum Erhitzen von zumindest einem Teil des in den Katalysator-Strömungskörper einströmenden Gasstroms;
- Zuführen des durch den Katalysator-Strömungskörper geführten, darin erhitzten Gasstroms zu dem Reinigungs-Strömungskörper zum Erhitzen desselben.

Ein Katalysator-Strömungskörper, welcher einem Reinigungs-Strömungskörper vorgeschaltet ist, ermöglicht die katalytische Verbrennung von in dem zugeführten Gasstrom enthaltenen Bestandteilen und somit eine effiziente Erhitzung des Reinigungs-Strömungskörpers.

Verwendet man eine einfache Kombination aus einem herkömmlichen Katalysator-Strömungskörper und einem bezüglich einer Hauptströmungsrichtung dem Katalysator-Strömungskörper nachgeordneten Reinigungs-Strömungskörper, so können die in dem Katalysator-Strömungskörper stattfindenden chemischen Reaktionen zum Erliegen kommen, wenn der in den Katalysator-Strömungskörper einströmende Gasstrom den Katalysator-Strömungskörper unter eine bestimmte Grenztemperatur abkühlt.

Vorzugsweise wird daher Wärme von einem stärker erhitzten Abschnitt des Katalysator-Strömungskörpers zum Erhitzen von zumindest einem Teil des in den Katalysator-Strömungskörper einströmenden Gasstroms verwendet. Ein kontinuierliches und somit auf Dauer zu starkes Absinken der Temperatur des Katalysator-Strömungskörpers, welches weitere chemische Reaktionen verhindern würde, wird hierdurch vorzugsweise unterbunden.

Vorzugsweise wird zumindest ein Teil, insbesondere ein trennwandnaher Teil, beispielsweise eine molekulare Grenzschicht an einer Trennwand, des in den Katalysator-Strömungskörper einströmenden Gasstroms durch die Zuführung von Wärme aus einem stärker erhitzten Abschnitt des Katalysator-Strömungskörpers auf eine Temperatur erhitzt, welche es ermöglicht, dass die Bestandteile des Gasstroms zur Erzeugung von Wärme chemisch miteinander reagieren.

Während des Durchströmens des Katalysator-Strömungskörpers wird der Gasstrom von einer Eintrittstemperatur auf eine Austrittstemperatur erhitzt. Dabei erfolgt die Erhitzung teilweise durch Wärmeübertragung von dem Katalysator-Strömungskörper auf den Gasstrom und teilweise durch exotherme chemische Reaktionen der Bestandteile des Gasstroms miteinander.

Vorzugsweise ist eine Eintrittstemperatur des einströmenden Gasstroms niedriger als eine Temperatur des Gasstroms, welche eine, beispielsweise katalytisch mittels des Katalysator-Strömungskörpers induzierte, chemische Reaktion von Bestandteilen des Gasstroms ermöglicht (Grenztemperatur).

Vorzugsweise wird der Gasstrom durch die Wärmeübertragung von mindestens einem stärker erhitzten Abschnitt des Katalysator-Strömungskörpers auf den Gasstrom auf die benötigte Temperatur oberhalb der Grenztemperatur erhitzt.

Unter einem einströmenden Gasstrom ist in dieser Beschreibung und den beigefügten Ansprüchen insbesondere ein Gasstrom zu verstehen, welcher ausgehend von einer Eintrittsöffnung des Katalysator-Strömungskörpers höchstens ungefähr ein Drittel, insbesondere höchstens ungefähr ein Fünftel, des gesamten Durchströmungsweges zurückgelegt hat.

Unter einer Reinigung eines Rohgasstroms ist in dieser Beschreibung und den beigefügten Ansprüchen insbesondere eine Umwandlung, eine Absorption und/oder eine Filterung von unerwünschten, insbesondere schädlichen, Bestandteilen eines Rohgasstroms zur Entfernung derselben aus dem Rohgasstrom zu verstehen.

Vorzugsweise wird zumindest ein Teil des in den Katalysator-Strömungskörper einströmenden Gasstroms zum Erhitzen desselben in direkten Kontakt mit mindestens einem stärker erhitzten Abschnitt des Katalysator-Strömungskörpers gebracht. Die Wärme wird dabei vorzugsweise durch Wärmeleitung unmittelbar von mindestens einem stärker erhitzten Abschnitt des Katalysator-Strömungskörpers auf den einströmenden Gasstrom übertragen.

Alternativ oder ergänzend hierzu kann vorgesehen sein, dass Wärme von mindestens einem stärker erhitzten Abschnitt des Katalysator-Strömungskörpers auf mindestens einen weniger stark erhitzten Abschnitt des Katalysator-Strömungskörpers und von dem mindestens einen weniger stark erhitzten Abschnitt des Katalysator-Strömungskörpers auf zumindest einen Teil des in den Katalysator-Strömungskörper einströmenden Gasstroms zum Erhitzen desselben übertragen wird. Insbesondere kann hierbei vorgesehen sein, dass die Wärme durch Wärmeleitung von mindestens einem stärker erhitzten Abschnitt des Katalysator-Strömungskörpers auf mindestens einen weniger stark erhitzten Abschnitt des Katalysator-Strömungskörpers und von dort wiederum durch Wärmeleitung auf den einströmenden Gasstrom übertragen wird.

Vorteilhaft kann es sein, wenn mindestens ein bezüglich mindestens eines Durchströmungsweges und einer ersten Durchströmungsrichtung stromabwärts angeordneter Abschnitt des Katalysator-Strömungskörpers zum Erhitzen desselben in einer ersten Durchströmungsrichtung und zum Erhitzen von zumindest einem Teil des in den Katalysator-Strömungskörper einströmenden Gasstroms in einer zweiten Durchströmungsrichtung durchströmt wird.

Die erste Durchströmungsrichtung ist dabei vorzugsweise der zweiten Durchströmungsrichtung entgegengesetzt.

Günstig kann es sein, wenn mindestens ein bezüglich mindestens eines Durchströmungsweges und einer ersten Durchströmungsrichtung stromabwärts angeordneter Abschnitt des Katalysator-Strömungskörpers zum Erhitzen desselben in der ersten Durchströmungsrichtung und zum Erhitzen von zumindest einem Teil des in den Katalysator-Strömungskörper einströmenden Gasstroms bezüglich desselben Durchströmungsweges in einer der ersten Durchströmungsrichtung entgegengesetzten Durchströmungsrichtung durchströmt wird.

Günstig kann es sein, wenn der Katalysator-Strömungskörper räumlich voneinander getrennte Abschnitte aufweist, welche zeitgleich in einander entgegengesetzten Durchströmungsrichtungen mit zumindest einem Teil des Gasstroms durchströmt werden.

Ferner kann vorgesehen sein, dass voneinander verschiedene Abschnitte des Katalysator-Strömungskörpers zeitlich überlappend in einander entgegengesetzten Durchströmungsrichtungen mit zumindest einem Teil des Gasstroms durchströmt werden.

Vorzugsweise ist vorgesehen, dass mindestens ein stärker erhitzter Abschnitt des Katalysator-Strömungskörpers, welcher bezüglich mindestens eines Durchströmungsweges stromabwärts angeordnet ist, benachbart zu mindestens einem weniger stark erhitzten Abschnitt des Katalysator-Strömungskörpers, welcher bezüglich mindestens eines Durchströmungsweges stromaufwärts angeordnet ist, angeordnet ist, so dass Wärme von dem stärker erhitzten Abschnitt durch Wärmeleitung auf den weniger stark erhitzten Abschnitt übertragen wird.

Insbesondere kann hierbei vorgesehen sein, dass ein bezüglich eines Durchströmungsweges stärker erhitzter Abschnitt des Katalysator-Strömungskörpers und ein bezüglich desselben Durchströmungsweges weniger stark erhitzter Abschnitt des Katalysator-Strömungskörpers benachbart zueinander angeordnet sind, so dass Wärme von dem stärker erhitzten Abschnitt durch Wärmeleitung auf den weniger stark erhitzten Abschnitt übertragen wird. Insbesondere kann hierbei vorgesehen sein, dass die beiden Abschnitte des Katalysator-Strömungskörpers bezüglich einer Durchströmungsrichtung seitlich benachbart zueinander angeordnet sind.

Alternativ oder ergänzend hierzu kann vorgesehen sein, dass der Katalysator-Strömungskörper mindestens einen stärker erhitzten Abschnitt aufweist, welcher bezüglich eines Durchströmungsweges stromabwärts und benachbart, insbesondere bezüglich einer Durchströmungsrichtung seitlich benachbart, zu mindestens einem weniger stark erhitzten Abschnitt des Katalysator-Strömungskörpers, welcher bezüglich eines anderen Durchströmungsweges stromaufwärts angeordnet ist, angeordnet ist.

Vorteilhaft kann es sein, wenn die Wärme von dem stärker erhitzten Abschnitt auf den weniger stark erhitzten Abschnitt in einer Richtung übertragen wird, welche im Wesentlichen quer zu mindestens einer Durchströmungsrichtung des stärker erhitzten Abschnitts und/oder im Wesentlichen quer zu mindestens einer Durchströmungsrichtung des weniger stark erhitzten Abschnitts ausgerichtet ist. Die Wärme wird somit vorzugsweise nicht längs des Durchströmungsweges, sondern hauptsächlich quer zu mindestens einer Durchströmungsrichtung von dem stärker erhitzten Abschnitt auf den weniger stark erhitzten Abschnitt übertragen.

Es kann vorgesehen sein, dass der Gasstrom vor dessen Zuführung zu dem Katalysator-Strömungskörper mit chemisch reaktiven Bestandteilen zum Erzeugen von Wärme angereichert wird.

Insbesondere kann hierbei vorgesehen sein, dass der Gasstrom ein Abgasstrom eines Verbrennungsmotors ist, wobei der Verbrennungsmotor beispielsweise mittels einer Steuerungsvorrichtung so gesteuert und/oder geregelt wird, dass die Konzentration und/oder die Menge der in dem Gasstrom enthaltenen oxidierbaren und/oder oxidierenden Substanzen erhöht wird.

Alternativ oder ergänzend hierzu kann vorgesehen sein, dass dem Gasstrom chemisch reaktive Bestandteile zugeführt werden.

Durch eine Anreicherung des Gasstroms mit chemisch reaktiven Bestandteilen kann die durch exotherme Reaktion in dem Katalysator-Strömungskörper erhältliche Wärmemenge erhöht werden, beispielsweise um den dem Reinigungs-Strömungskörper zuzuführenden Gasstrom und somit auch den Reinigungs-Strömungskörper selbst auf eine gewünschte Temperatur erhitzen zu können.

Vorzugsweise umfasst die Reinigungsvorrichtung zur Reinigung eines Rohgasstroms Folgendes umfasst:
- einen vorzugsweise erfindungsgemäßen Katalysator-Strömungskörper, durch welchen ein Gasstrom hindurchleitbar ist, wobei durch chemische Reaktionen von Bestandteilen des Gasstroms während des Durchströmens des Katalysator-Strömungskörpers Wärme erzeugbar ist, so dass der Katalysator-Strömungskörper längs mindestens eines Durchströmungsweges erhitzbar ist und hierdurch mindestens ein stärker erhitzter Abschnitt des Katalysator-Strömungskörpers, welcher bezüglich mindestens eines Durchströmungsweges stromabwärts angeordnet ist, und mindestens ein weniger stark erhitzter Abschnitt des Katalysator-Strömungskörpers, welcher bezüglich mindestens eines Durchströmungsweges stromaufwärts angeordnet ist, erzeugbar sind;
- eine Strömungsführung, mittels welcher der in der Katalysator-Strömungskörper einströmende Gasstrom zum Erhitzen desselben mindestens einem Abschnitt des Katalysator-Strömungskörpers zuführbar ist, der aufgrund der Durchströmung mit dem Gasstrom und der dabei erfolgenden chemischen Reaktionen der Bestandteile des Gasstroms erhitzbar ist; und
- einen Reinigungs-Strömungskörper, welchem der durch den Katalysator-Strömungskörper geführte, darin erhitzte Gasstrom zum Erhitzen des Reinigungs-Strömungskörpers zuführbar ist.

Eine solche Reinigungsvorrichtung ist vorzugsweise effizient und zuverlässig betreibbar.

Die Reinigungsvorrichtung umfasst vorzugsweise eine Steuervorrichtung, so dass einzelne oder mehrere der beschriebenen Verfahrensschritte insbesondere automatisch durchführbar sind.

Zumindest ein Teil des in den Katalysator-Strömungskörper einströmenden Gasstroms ist zum Erhitzen desselben während des Einströmvorganges mittels der Strömungsführung vorzugsweise mit mindestens einem stärker erhitzten Abschnitt des Katalysator-Strömungskörpers in direkten Kontakt bringbar.

Alternativ oder ergänzend hierzu kann vorgesehen sein, dass zumindest ein Teil des in den Katalysator-Strömungskörper einströmenden Gasstroms zum Erhitzen desselben während des Einströmvorganges mittels der Strömungsführung mit mindestens einem stärker erhitzten Abschnitt des Katalysator-Strömungskörpers in indirekten Kontakt bringbar ist. Insbesondere kann hierbei vorgesehen sein, dass zumindest ein Teil des in den Katalysator-Strömungskörper einströmenden Gasstroms zum Erhitzen desselben während des Einströmvorganges mittels der Strömungsführung mit mindestens einem weniger stark erhitzten Abschnitt des Katalysator-Strömungskörpers in direkten Kontakt bringbar ist, welcher wiederum mittels mindestens eines stärker erhitzten Abschnitts erhitzbar ist, so dass Wärme auf den einströmenden Gasstrom übertragen werden kann.

Bei einer Ausgestaltung der Erfindung ist vorgesehen, dass mindestens ein Durchströmungsweg in dem Katalysator-Strömungskörper mäanderförmig ausgebildet ist.

Unter einem mäanderförmigen Durchströmungsweg ist in dieser Beschreibung und den beigefügten Ansprüchen insbesondere ein Durchströmungsweg zu verstehen, welcher sich abschnittsweise in einer ersten Raumrichtung, die eine erste Durchströmungsrichtung bildet, und abschnittsweise zumindest näherungsweise entgegen der ersten Raumrichtung erstreckt, so dass eine der ersten Durchströmungsrichtung zumindest näherungsweise entgegengesetzte zweite Durchströmungsrichtung gebildet ist.

Vorzugsweise sind bei einem mäanderförmigen Durchströmungsweg Durchströmungswegabschnitte desselben Durchströmungsweges gebildet, welche räumlich direkt aneinander angrenzen, insbesondere bezüglich der Durchströmungsrichtungen seitlich nebeneinander angeordnet sind.

Vorzugsweise sind die räumlich direkt aneinander angrenzenden Durchströmungswegabschnitte bezüglich des Durchströmungsweges voneinander beabstandet angeordnet, insbesondere bezüglich des Durchströmungsweges hintereinander und voneinander beabstandet angeordnet.

Günstig kann es sein, wenn mindestens ein Durchströmungsweg eine ungerade Anzahl von Durchströmungswegabschnitten mit alternierenden Durchströmungsrichtungen aufweist. Beispielsweise kann vorgesehen sein, dass mindestens ein Durchströmungsweg drei Durchströmungswegabschnitte aufweist, welche räumlich nebeneinander, jedoch bezüglich des Durchströmungsweges hintereinander angeordnet sind und alternierende Durchströmungsrichtungen aufweisen.

Vorteilhaft kann es sein, wenn die Reinigungsvorrichtung einen katalytischen Zwischenströmungskörper umfasst, durch welchen der durch den Katalysator-Strömungskörper geführte Gasstrom vor dessen Zuführung zu dem Reinigungsströmungskörper hindurchführbar ist. Auf diese Weise kann ein zusätzlicher Temperaturanstieg in dem Gasstrom vor dessen Zuführung zu dem Reinigungs-Strömungskörper erzielt werden.

Insbesondere kann vorgesehen sein, dass der katalytische Zwischenströmungskörper einen von dem Katalysator-Strömungskörper abweichenden Aufbau und/oder eine von dem Katalysator-Strömungskörper abweichende Zusammensetzung, insbesondere Beschichtung, aufweist, so dass mittels des katalytischen Zwischenströmungskörpers zusätzliche chemische Reaktionen der Bestandteile des Gasstroms induziert werden können.

Die Strömungsführung ist vorzugsweise so ausgestaltet, dass der Gasstrom zunächst dem katalytischen Strömungskörper, dann gegebenenfalls dem katalytischen Zwischenströmungskörper und dann dem Reinigungs-Strömungskörper zuführbar ist.

Günstig kann es sein, wenn der Katalysator-Strömungskörper ein keramisches Material und/oder ein metallisches Material umfasst oder aus einem keramischen Material oder aus einem metallischen Material gebildet ist.

Insbesondere kann vorgesehen sein, dass der Katalysator-Strömungskörper einen Grundkörper aus einem Keramikmaterial umfasst, welcher mit einem metallischen Material, beispielsweise mit Metallschaum, gefüllt ist.

Der Katalysator-Strömungskörper umfasst vorzugsweise eine Vielzahl von Strömungskanälen. Die Strömungskanäle sind vorzugsweise in dem Grundkörper des Katalysator-Strömungskörpers ausgebildet.

Es kann vorgesehen sein, dass die Strömungskanäle zumindest teilweise mit einem Metallschaum gefüllt sind. Auf diese Weise kann ein Wärmeübertrag von dem Katalysator-Strömungskörper auf den durch den Katalysator-Strömungskörper strömenden Gasstrom und/oder von dem durch den Katalysator-Strömungskörper strömenden Gasstrom auf den Katalysator-Strömungskörper verbessert werden.

Der katalytische Zwischenströmungskörper weist vorzugsweise einzelne oder mehrere der im Zusammenhang mit dem Katalysator-Strömungskörper beschriebenen Merkmale und/oder Vorteile auf.

Bei einer Ausgestaltung der Erfindung ist vorgesehen, dass der Katalysator-Strömungskörper eine Vielzahl von Strömungskanälen aufweist, welche im Wesentlichen parallel zueinander verlaufen.

Mindestens zwei benachbart zueinander angeordnete Strömungskanäle sind vorzugsweise in einander entgegengesetzten Durchströmungsrichtungen mit zumindest einem Teil des Gasstroms durchströmbar.

Günstig kann es sein, wenn der Katalysator-Strömungskörper als ein Wabenkörper ausgebildet ist. Der Wabenkörper umfasst vorzugsweise Waben mit beispielsweise rechteckigem Querschnitt, welche vorzugsweise die Strömungskanäle bilden.

Die Strömungskanäle sind vorzugsweise im Wesentlichen linear ausgebildet und/oder parallel zueinander angeordnet.

Günstig kann es sein, wenn mindestens zwei bezüglich mindestens einer Durchströmungsrichtung seitlich benachbart zueinander angeordnete Strömungskanäle Durchströmungswegabschnitte desselben Durchströmungsweges bilden.

Beispielsweise kann vorgesehen sein, dass drei Strömungskanäle benachbart zueinander angeordnet sind und drei Durchströmungswegabschnitte eines Durchströmungsweges bilden, so dass der durch die Strömungskanäle geführte Gasstrom zunächst längs eines ersten Durchströmungswegabschnitts in einer ersten Durchströmungsrichtung von einer Eintrittseite des Katalysator-Strömungskörpers auf die der Eintrittseite gegenüberliegende Austrittseite, dann in einer der ersten Durchströmungsrichtung entgegengesetzten zweiten Durchströmungsrichtung durch den zweiten Durchströmungswegabschnitt zurück zu der Eintrittseite und in der ersten Durchströmungsrichtung durch den dritten Durchströmungswegabschnitt erneut zu der Austrittseite führbar ist.

Die bezüglich des Durchströmungsweges aneinander angrenzenden Durchströmungswegabschnitte sind an ihren jeweiligen Enden (gemeinsamer Endbereich) vorzugsweise fluidwirksam miteinander verbunden, wobei ein Entweichen des Gasstroms in die Umgebung im Bereich der Verbindung (gemeinsamer Endbereich) zwischen den Durchströmungswegabschnitten vorzugsweise durch eine geeignete Abdichtung (Kanalverschluss) vermieden wird.

Die Reinigungsvorrichtung eignet sich insbesondere zur Reinigung eines Abgasstroms.

Vorzugsweise ist der Gasstrom ein Abgasstrom eines Verbrennungsmotors, beispielsweise eines Magermotors.

Ferner kann vorgesehen sein, dass der Reinigungs-Strömungskörper ein Partikelfilter, insbesondere ein Dieselruß-Partikel-Filter, ist.

Die Reinigungsvorrichtung ist somit insbesondere eine Abgasnachbehandlungsvorrichtung.

Der Reinigungs-Strömungskörper ist vorzugsweise passiv regenerierbar.

Die Reinigungsvorrichtung kann ferner einen NOₓ-Speicherkatalysator (LNT) umfassen.

Die Reinigungsvorrichtung eignet sich vorzugsweise sowohl für stationäre als auch für mobile Anwendungen. Beispielsweise kann die Reinigungsvorrichtung in Fahrzeugen, insbesondere in Landfahrzeugen, zum Einsatz kommen.

Ferner können das Verfahren gemäß der Offenbarung, der erfindungsgemäße Katalysator-Strömungskörper und/oder die erfindungsgemäße Reinigungsvorrichtung einzelne oder mehrere der nachfolgend beschriebenen Merkmale und/oder Vorteile aufweisen:
Es kann eine Einbringvorrichtung zum Einbringen mindestens eines Zusatzstoffes in den Gasstrom vorgesehen sein. Insbesondere kann vorgesehen sein, dass mittels der Einbringvorrichtung oxidierbare und/oder oxidierende Stoffe in den Gasstrom bringbar sind, um die Menge und/oder Konzentration der in dem Gasstrom befindlichen chemisch reaktiven Bestandteile zu erhöhen.

Günstig kann es sein, wenn mindestens eine Bypass-Vorrichtung vorgesehen ist, mittels welcher zumindest ein Teil des Gasstroms an mindestens einem Katalysator-Strömungskörper, an einem katalytischen Zwischenströmungskörper und/oder an dem Reinigungs-Strömungskörper vorbeiführbar ist, ohne den mindestens einen Katalysator-Strömungskörper, den katalytischen Zwischenströmungskörper und/oder den Reinigungs-Strömungskörper zu durchströmen.

Der Katalysator-Strömungskörper kann beispielsweise als ein Oxidationskatalysator (DOC) ausgebildet sein.

Das Verfahren zum Erhitzen kann vorzugsweise bei beliebig tiefer Gasstromtemperatur (Eintrittstemperatur) durchgeführt werden. Vorzugsweise muss lediglich zum Start des Verfahrens eine Gasstromtemperatur eingestellt werden, welche über einer Grenztemperatur liegt, ab welcher die in dem Gasstrom befindlichen chemisch reagierenden Bestandteile exotherm miteinander reagieren. Im Anschluss daran ist mittels des Verfahrens vorzugsweise ein kontinuierlicher Betrieb ohne externe Energiezufuhr und/oder Vorheizung möglich.

Die Erhöhung der Gastemperatur auf einen Wert über der Grenztemperatur zum Start des Verfahrens kann beispielsweise durch Hilfsmaßnahmen, insbesondere durch eine geeignete Steuerung einer Verbrennungsvorrichtung, insbesondere eines Verbrennungsmotors, oder eines Hilfsbrenners, durch Drosselung der Verbrennungsvorrichtung, insbesondere des Verbrennungsmotors, und/oder elektrisch, erfolgen.

Der Reinigungs-Strömungskörper ist beispielsweise eine Filtervorrichtung aus einem porösen keramischen Material mit hoher Temperaturwechselbeständigkeit, beispielsweise Cordierit oder Siliziumcarbid (SiC).

Alternativ oder ergänzend hierzu kann vorgesehen sein, dass der Reinigungs-Strömungskörper aus einem porösen Sintermaterial gebildet ist.

Günstig kann es sein, wenn der Katalysator-Strömungskörper, der katalytische Zwischenströmungskörper und/oder der Reinigungs-Strömungskörper mit einer katalytischen Beschichtung, beispielsweise auf der Basis von Eisen, Cer, Vanadium und/oder Platin, versehen ist.

Alternativ oder ergänzend hierzu kann vorgesehen sein, dass einem Brennstoff der Verbrennungsvorrichtung, insbesondere einem Brennstoff des Verbrennungsmotors, katalytisch wirksame Bestandteile, insbesondere auf der Basis von Eisen, Cer, Vanadium und/oder Platin, beigemischt werden.

Der Katalysator-Strömungskörper, der katalytische Zwischenströmungskörper und/oder der Reinigungs-Strömungskörper können beispielsweise einen Grundkörper mit einer keramischen oder metallischen Trägerstruktur und einer aktiven, katalytischen Beschichtung mit hohem Platingehalt aufweisen.

Vorzugsweise umfassen der Katalysator-Strömungskörper, der katalytische Zwischenströmungskörper und/oder der Reinigungs-Strömungskörper einen Grundkörper, welcher mit zueinander parallelen Strömungskanälen, mit strukturierten Kanalformen, welche beispielsweise Öffnungen und Umlenkungen aufweisen, mit Geweben, mit Gestricken, mit Schüttungen und/oder mit einem schaumartigen Aufbau versehen ist.

Vorzugsweise umfassen der Katalysator-Strömungskörper, der katalytische Zwischenströmungskörper und/oder der Reinigungs-Strömungskörper parallele Kanäle, welche einen geringen Druckverlust aufweisen.

Zur Temperaturerhöhung des dem Katalysator-Strömungskörper zugeführten Gasstroms kann vorgesehen sein, dass mittels einer Steuervorrichtung eine Verbrennungsvorrichtung, insbesondere ein Verbrennungsmotor, geeignet gesteuert und/oder geregelt wird. Insbesondere können hierbei eine Ansaugdrosselung, Maßnahmen an einem Turbolader oder der Abgasrückführung und/oder eine Nacheinspritzung von zusätzlichem Treibstoff vorgesehen sein. Alternativ oder ergänzend hierzu kann vorgesehen sein, dass der Reinigungs-Strömungskörper, der katalytische Zwischenströmungskörper und/oder der Katalysator-Strömungskörper elektrisch erhitzt werden.

Als Zusatzstoff kann mittels der Einbringvorrichtung beispielsweise Treibstoff, insbesondere Dieselkraftstoff, Ethanol, Glykol, Propan, Butan und/oder Ethylen zugeführt werden. Alternativ oder ergänzend hierzu können auch Katalytbenzin und/oder Isopropylalkohol zugeführt werden.

Zur besseren Vermischung der in den Gasstrom eingebrachten Zusatzstoffe kann vorgesehen sein, dass mindestens ein statischer Mischer vorgesehen ist. Insbesondere kann hierbei vorgesehen sein, dass mindestens ein statischer Mischer in einer Zuführleitung angeordnet ist.

Während der Regeneration des Reinigungs-Strömungskörpers wird der Gasstrom, beispielsweise durch motorische Maßnahmen, vorzugsweise durch Kohlenstoffmonoxid und Kohlenwasserstoffe angereichert.

Mittels der Steuervorrichtung kann vorzugsweise die Menge und/oder Konzentration der mittels der Einbringvorrichtung einbringbaren Zusatzstoffe gesteuert und/oder geregelt werden, insbesondere in Abhängigkeit von einem ermittelten Last- und/oder Abgasdurchsatzsignal eines Verbrennungsmotors und/oder der Temperatur des Gasstroms vor und/oder nach dem Durchströmen des Katalysator-Strömungskörpers.

Zur Erhöhung eines Wärmeübertrags von dem Gasstrom auf den Katalysator-Strömungskörper und/oder von dem Katalysator-Strömungskörper auf den Gasstrom kann vorgesehen sein, dass mindestens ein Strömungskanal des Katalysator-Strömungskörpers mit Vorsprüngen und/oder Vertiefungen, beispielsweise mit sogenannten ausgeklappten Schaufeln, versehen ist, welche eine turbulente Durchströmung des Katalysator-Strömungskörpers bewirken, insbesondere eine laminare Strömung, welche sich ohne derartige Vorsprünge und/oder Vertiefungen ausbilden würde, durchbrechen.

Die Verfahren gemäß der Offenbarung und/oder der erfindungsgemäße Katalysator-Strömungskörper weisen vorzugsweise ferner einzelne oder mehrere der nachfolgend beschriebenen Merkmale auf:
Eine Strömungskanalumlenkung erfolgt vorzugsweise innerhalb des Grundkörpers und/oder ist an die Struktur des Grundkörpers, insbesondere eine Wabenstruktur, beispielsweise eine Wabenmikrostruktur, angepasst. Ein externes Umlenkelement ist somit vorzugsweise entbehrlich.

Durch geeignete Anordnung der Strömungskanäle, der Aussparungen und/oder der Kanalverschlüsse können vorzugsweise 5/6 der Fläche der Kanalwände als Wärmetauschflächen verwendet werden.

Der erfindungsgemäße Katalysator-Strömungskörper kann vorzugsweise kostengünstig mit denselben Produktionsmitteln hergestellt werden wie Diesel ruß-Partikel-Filter.

Weitere bevorzugte Merkmale und/oder Vorteile des erfindungsgemäßen Katalysator-Strömungskörpers, der erfindungsgemäßen Reinigungsvorrichtung, der erfindungsgemäßen Wärmekraftmaschine und/oder der erfindungsgemäßen Verwendung sind Gegenstand der nachfolgenden Beschreibung und der zeichnerischen Darstellung von Ausführungsbeispielen.

In den Zeichnungen zeigen:
- Fig. 1: einen schematischen horizontalen Längsschnitt durch einen Katalysator-Strömungskörper;
- Fig. 2: eine schematische Draufsicht auf eine Eintrittseite des Katalysator-Strömungskörpers;
- Fig. 3: einen schematischen Längsschnitt durch den Katalysator-Strömungskörper längs der Linie 3-3 in Fig. 2;
- Fig. 4: eine der Fig. 2 entsprechende schematische Draufsicht auf die Eintrittseite des Katalysator-Strömungskörpers, wobei einzelne Trennwände des Katalysator-Strömungskörpers mit Aussparungen versehen sind;
- Fig. 5: eine der Fig. 4 entsprechende schematische Draufsicht auf eine Austrittseite des Katalysator-Strömungskörpers, wobei ebenfalls einzelne Trennwände mit Aussparungen versehen sind;
- Fig. 6: eine der Fig. 3 entsprechende schematische Schnittdarstellung des Katalysator-Strömungskörpers, wobei gemäß den Fig. 4 und 5 einzelne Trennwände mit Aussparungen versehen sind;
- Fig. 7: eine der Fig. 4 entsprechende schematische Draufsicht auf die Eintrittseite des Katalysator-Strömungskörpers, wobei Paare von Strömungskanälen des Katalysator-Strömungskörpers mit Kanalverschlüssen versehen sind;
- Fig. 8: eine der Fig. 5 entsprechende schematische Draufsicht auf die Austrittseite des Katalysator-Strömungskörpers, wobei entsprechend der Eintrittseite in Fig. 7 ebenfalls Paare von Strömungskanälen mit Kanalverschlüssen versehen sind;
- Fig. 9: eine der Fig. 6 entsprechende schematische Darstellung des Katalysator-Strömungskörpers, wobei gemäß den Fig. 7 und 8 Paare von Strömungskanälen mit Kanalverschlüssen versehen sind;
- Fig. 10: einen schematischen Schnitt durch den mit Aussparungen und Kanalverschlüssen versehenen Katalysator-Strömungskörper längs der Linie 10-10 in Fig. 11;
- Fig. 11: eine der Fig. 9 entsprechende schematische Darstellung des Katalysator-Strömungskörpers zur Illustration der Durchströmungswege;
- Fig. 12: eine schematische Darstellung einer Reinigungsvorrichtung zur Reinigung eines Rohgasstroms, bei welcher ein Katalysator-Strömungskörper und ein Reinigungsströmungskörper vorgesehen sind; und
- Fig. 13: eine schematische Darstellung einer Wärmekraftmaschine, bei welcher zwischen einer Verbrennungsvorrichtung und einer Turbinenvorrichtung ein Katalysator-Strömungskörper angeordnet ist.

Gleiche oder funktional äquivalente Elemente sind in sämtlichen Figuren mit denselben Bezugszeichen versehen.

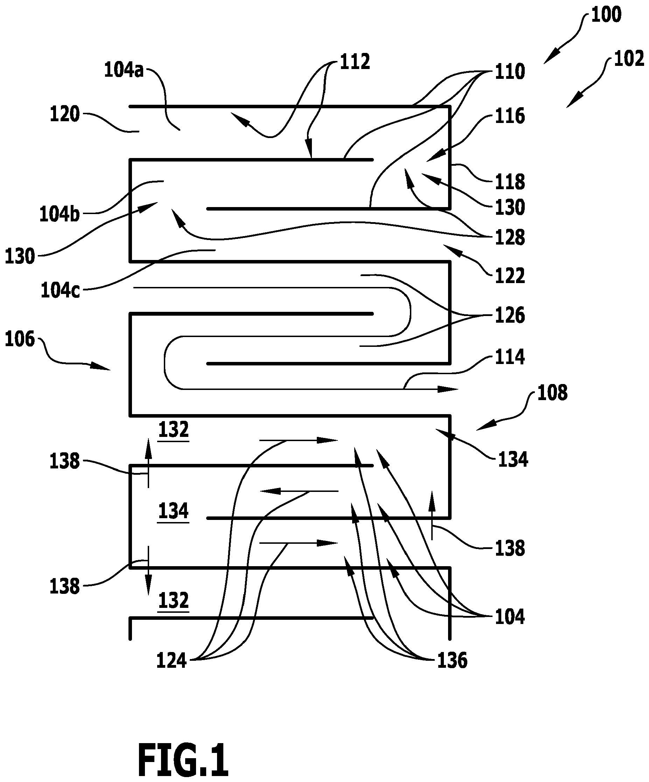

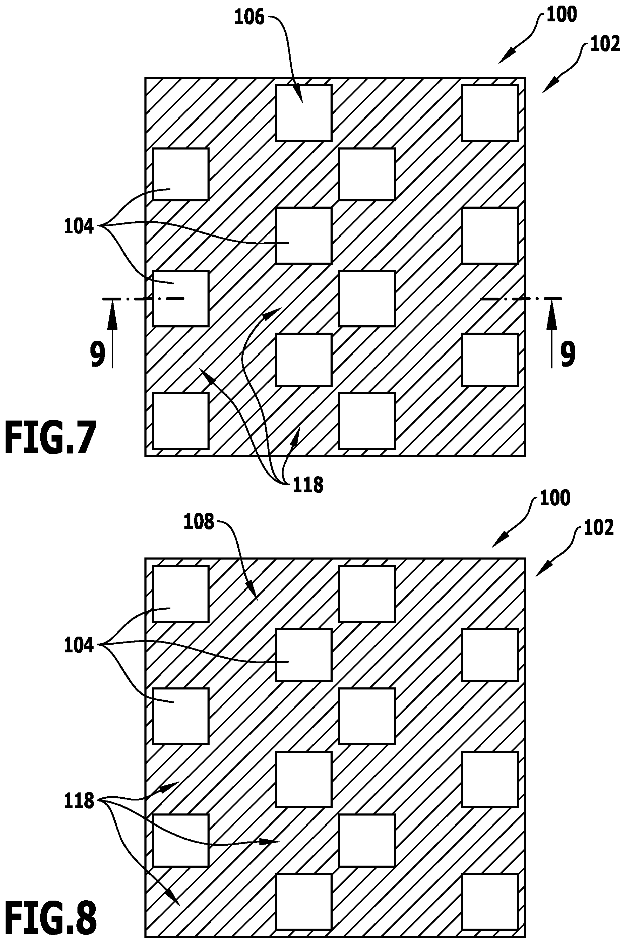

Ein in den Fig. 1 bis 11 dargestellter, als Ganzes mit 100 bezeichneter Katalysator-Strömungskörper umfasst einen Grundkörper 102, welcher im Wesentlichen quaderförmig oder zylindrisch ausgebildet ist und eine Vielzahl von Strömungskanälen 104 umfasst.

Die Strömungskanäle sind im Wesentlichen zylindrisch mit quadratischer Grundfläche ausgebildet und matrixförmig in einem quadratischen Muster sowie parallel zueinander verlaufend angeordnet.

Die Strömungskanäle 104 erstrecken sich von einer Eintrittseite 106 des Grundkörpers 102 bis zu einer Austrittseite 108 des Grundkörpers 102.

Zwischen den Strömungskanälen 104 sind Trennwände 110 angeordnet.

Der Grundkörper 102 ist insbesondere ein Wabenkörper mit quadratischem Querschnitt und quadratischen Waben.

Der Grundkörper 102 ist mit einer katalytischen Beschichtung 112 versehen, so dass Reaktionen eines durch den Grundkörper 102 hindurchströmenden Gases gezielt beeinflusst werden können.

Mittels der Strömungskanäle 104 ist in dem Katalysator-Strömungskörper 100 eine Vielzahl von mäanderförmigen Durchströmungswegen 114 gebildet.

Hierzu sind jeweils drei Strömungskanäle 104 fluidwirksam miteinander verbunden.

Die Trennwand 110 zwischen einem ersten Strömungskanal 104a und einem zweiten Strömungskanal 104b ist hierzu auf der Austrittseite 108 des Grundkörpers 102 mit einer Aussparung 116 versehen, so dass innerhalb des Grundkörpers 102 eine fluidwirksame Verbindung zwischen dem ersten Strömungskanal 104a und dem zweiten Strömungskanal 104b hergestellt ist.

Sowohl der erste Strömungskanal 104a als auch der zweite Strömungskanal 104b sind auf der Austrittseite 108 mittels eines Kanalverschlusses 118 abgedichtet, so dass durch den ersten Strömungskanal 104a und den zweiten Strömungskanal 104b strömendes Gas nicht unmittelbar aus dem ersten Strömungskanal 104a oder dem zweiten Strömungskanal 104b an der Austrittseite 108 des Grundkörpers 102 aus dem Grundkörper 102 herausströmen kann.

Der zweite Strömungskanal 104b ist ferner auf der Eintrittseite 106 des Grundkörpers 102 mit einem weiteren Strömungskanal 104, nämlich einem dritten Strömungskanal 104c, fluidwirksam verbunden. Hierzu ist in der Trennwand 110 zwischen dem zweiten Strömungskanal 104b und dem dritten Strömungskanal 104c an der Eintrittseite 106 des Grundkörpers 102 eine weitere Aussparung 116 vorgesehen.

Der zweite Strömungskanal 104b und der dritte Strömungskanal 104c sind auf der Eintrittseite 106 des Grundkörpers 102 mit einem weiteren Kanalverschluss 118 abgedichtet. Durch den zweiten Strömungskanal 104b und den dritten Strömungskanal 104c strömendes Gas kann somit nicht unmittelbar aus dem zweiten Strömungskanal 104b oder dem dritten Strömungskanal 104c auf der Eintrittseite 106 des Grundkörpers 102 aus dem Grundkörper 102 herausströmen.

Der erste Strömungskanal 104a ist zu der Eintrittseite 106 des Grundkörpers 102 offen ausgebildet, so dass eine Eintrittsöffnung 120 des Grundkörpers 102 gebildet ist.

Der dritte Strömungskanal 104c ist auf der Austrittseite 108 des Grundkörpers 102 offen ausgebildet, so dass eine Austrittsöffnung 122 des Grundkörpers 102 gebildet ist.

Der erste Strömungskanal 104a, der zweite Strömungskanal 104b und der dritte Strömungskanal 104c bilden einen Durchströmungsweg 114, längs welchem in den Grundkörper 102 einströmendes Gas durch den Grundkörper 102 hindurchströmen und schließlich aus dem Grundkörper 102 wieder herausströmen kann.

Der Durchströmungsweg 114 ist mäanderförmig ausgebildet, da ein einströmender Gasstrom aufgrund der Fluidverbindung des ersten Strömungskanals 104a und des zweiten Strömungskanals 104b sowie des Kanalverschlusses 118 im Bereich der Austrittseite 108 des Grundkörpers 102 nach Durchströmen des ersten Strömungskanals 104a in einer Durchströmungsrichtung 124 umgelenkt und entgegen dieser Durchströmungsrichtung 124 durch den zweiten Strömungskanal 104b zurück zur Eintrittseite 106 des Grundkörpers 102 geführt wird. Ferner wird der durch den Grundkörper 102 strömende Gasstrom mittels der Fluidverbindung zwischen dem zweiten Strömungskanal 104b und dem dritten Strömungskanal 104c und des Kanalverschlusses 118 im Bereich der Eintrittseite 106 des Grundkörpers 102 erneut umgelenkt, so dass er nach Durchströmen des zweiten Strömungskanals 104b in erneut umgekehrter Durchströmungsrichtung den dritten Strömungskanal 104c durchströmt. Durch die Austrittsöffnung 122 kann der Gasstrom schließlich den Grundkörper 102 verlassen.

Mittels eines Paars 126 von Strömungskanälen 104, einer Aussparung 116 in einer die Strömungskanäle 104 voneinander trennenden Trennwand 110 und eines die Strömungskanäle 104 abdichtenden Kanalverschlusses 118 kann somit eine Strömungsumlenkung 128 gebildet werden.

Mittels zweier Strömungsumlenkungen 128 und unter Verwendung von drei benachbarten Strömungskanälen 104 kann ein mäanderförmiger Durchströmungsweg 114 gebildet werden.

Die Aussparungen 116 und Kanalverschlüsse 118 sind dabei stets in einem gemeinsamen Endbereich 130 des Paars 126 von Strömungskanälen 104 angeordnet.

Sämtliche Eintrittsöffnungen 120 des Katalysator-Strömungskörpers 100 sind auf der Eintrittseite 106 angeordnet.

Sämtliche Austrittsöffnungen 122 des Katalysator-Strömungskörpers 100 sind auf der Austrittseite 108 angeordnet.

Bei der Durchströmung des Katalysator-Strömungskörpers 100 mit einem reaktiven Gasstrom längs des Durchströmungswegs 114 erhitzt sich der Gasstrom aufgrund von exothermen Reaktionen von Bestandteilen des Gasstroms. Auch der Katalysator-Strömungskörper 100 wird hierdurch erhitzt.

Da die Wärmeentwicklung im Verlauf des Durchströmungswegs 114 zunimmt, weist jeder der Strömungskanäle 104 einen bezüglich des Durchströmungswegs 114 stromaufwärts angeordneten, weniger stark erhitzten Abschnitt 132 und einen bezüglich des Durchströmungswegs 114 stromabwärts angeordneten, stärker erhitzten Abschnitt 134 auf. Die Strömungskanäle 104 bilden dabei Durchströmungswegabschnitte 136 des Durchströmungswegs 114.

Aufgrund der benachbarten Anordnung der Strömungskanäle 104 kann Wärme aus einem stärker erhitzten Abschnitt 134 eines Durchströmungswegabschnitts 136 auf einen weniger stark erhitzten Abschnitt 132 eines anderen Durchströmungswegabschnitts 136 übertragen werden.

Beispielsweise kann Wärme von dem stärker erhitzten Abschnitt 134 des zweiten Strömungskanals 104b, welcher auf der Eintrittseite 106 des Katalysator-Strömungskörpers 100 angeordnet ist, auf den ebenfalls auf der Eintrittseite 106 des Katalysator-Strömungskörpers 100 angeordneten, weniger stark erhitzten Abschnitt 132 des ersten Strömungskanals 104a übertragen werden.

Hierdurch kann der Bereich des ersten Strömungskanals 104a, in welchen der in den Katalysator-Strömungskörper 100 einströmende Gasstrom einströmt, gezielt erwärmt werden, um auch den Gasstrom selbst zu erwärmen.

Somit wird Wärme aus dem stärker erhitzten Abschnitt 134 des zweiten Strömungskanals 104b auf den in den Katalysator-Strömungskörper 100 einströmenden Gasstrom übertragen.

Die von den stärker erhitzten Abschnitten 134 auf die weniger stark erhitzten Abschnitte 132 übertragene Wärme wird dabei vorzugsweise in einer Wärmeübertragungsrichtung 138 übertragen, welche im Wesentlichen quer, insbesondere im Wesentlichen senkrecht zur Durchströmungsrichtung 124 in den einzelnen Strömungskanälen 104 ist.

Durch die innere Wärmeübertragung des Katalysator-Strömungskörpers 100 kann somit vorzugsweise ein Erlöschen der Reaktion in dem Katalysator-Strömungskörper 100 aufgrund einer zu geringen Temperatur des einströmenden Gasstroms verhindert werden.

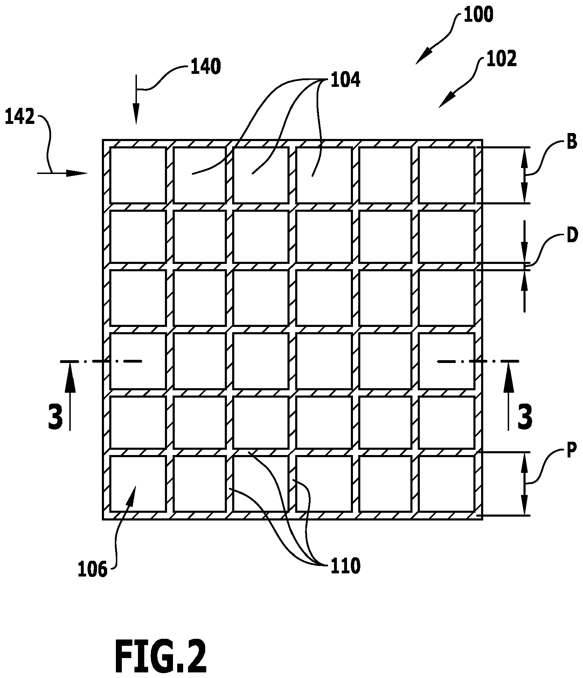

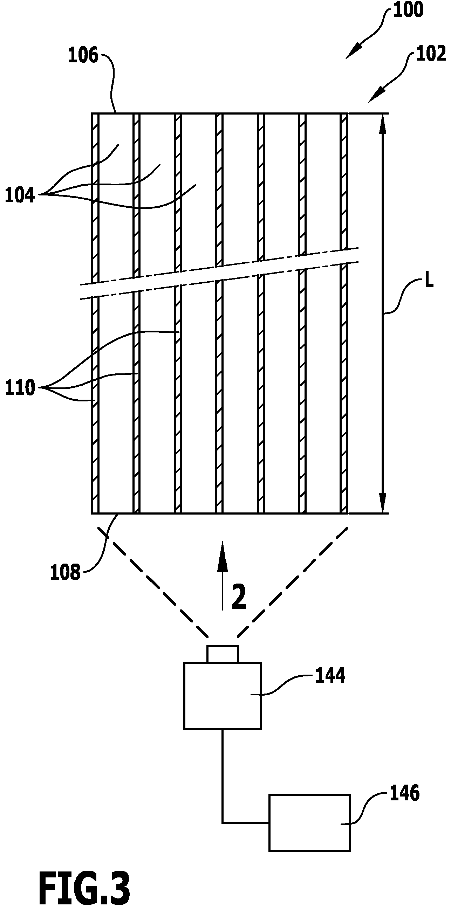

Wie insbesondere den Fig. 2 und 3 zu entnehmen ist, ist der Grundkörper 102 in einem Ausgangszustand, in welchem noch keine Aussparungen 116 und keine Kanalverschlüsse 118 vorgesehen sind, insbesondere ein Wabenkörper mit matrixförmig angeordneten zylindrischen Waben, welche einen quadratischen Querschnitt aufweisen.

Der Grundkörper 102 kann beispielsweise aus einer plastischen keramischen Masse, die vorzugsweise Cordierit umfasst, extrudiert werden. Die Zellengröße (Strömungskanalgröße) und die Wandstärke (Dicke der Trennwände 110) sind grundsätzlich frei wählbar. Vorzugsweise werden 100, 200 oder 300 Strömungskanäle pro Quadratzoll (cells per square inch) vorgesehen.

Ein offener Querschnitt, welcher sich aus dem Verhältnis der Dicke D der Trennwand (Zellenwand) und dem Abstand der Zentren zweier benachbarter, parallel zueinander verlaufender Trennwände (sogenannter Pitch P) gemäß der Formel (Pitch - Trennwanddicke)²/(Pitch)² ergibt, beträgt vorzugsweise ungefähr 70%.

Die Anzahl der Strömungskanäle 104 pro Spalte 140 und/oder Zeile 142 ist vorzugsweise ganzzahlig durch drei teilbar. Vorzugsweise ist die Anzahl der Strömungskanäle 104 in einer Spalte 140 gleich groß wie die Anzahl der Strömungskanäle 104 in einer Zeile 142. Der Querschnitt des Grundkörpers 102 (Wabenquerschnitt) ist somit vorzugsweise quadratisch.

Eine Länge L des Grundkörpers 102 beträgt vorzugsweise das vierzig- bis fünfzigfache des Betrags des Pitch P.

Das Material des Grundkörpers 102, insbesondere Cordierit, weist vorzugsweise eine gute Extrudierfähigkeit, einen geringen Wärmeausdehnungskoeffizienten sowie eine hohe thermische und mechanische Stabilität auf. Der Wärmeleitkoeffizient ist vorzugsweise ausreichend hoch, um eine Wärmeübertragung durch die Trennwände zu ermöglichen.

Nach dem Extrudieren und Abschneiden des Grundkörpers 102 in einem Weichzustand wird der Grundkörper 102 mittels Gefriertrocknung getrocknet und anschließend auf ein Trockenmaß abgelängt. Die trockenen ungebrannten Grundkörper 102 sind ausreichend stabil zur Handhabung und weich genug für eine mechanische Weiterverarbeitung.

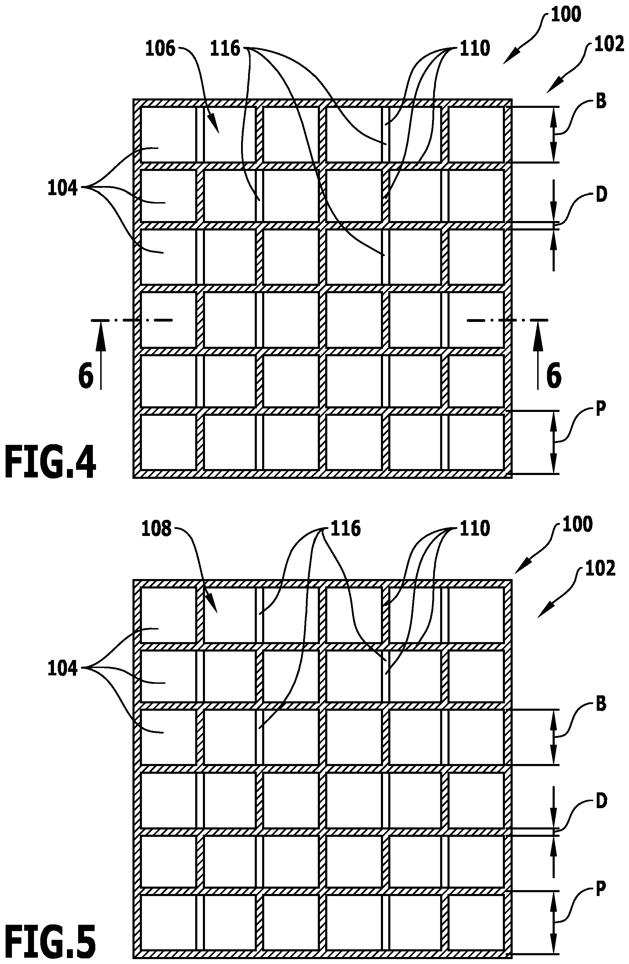

Wie insbesondere den Fig. 4 bis 6 zu entnehmen ist, wird der Grundkörper 102 durch das Einbringen von Aussparungen 116 weiterverarbeitet.

Hierzu wird, wie in Fig. 3 dargestellt ist, mittels einer Bildaufnahmevorrichtung 144 und einer Bildauswertungsvorrichtung 146 die Position der Trennwände 110 ermittelt, um gezielt und zuverlässig einzelne Aussparungen 116 in die Trennwände 110 einbringen zu können.

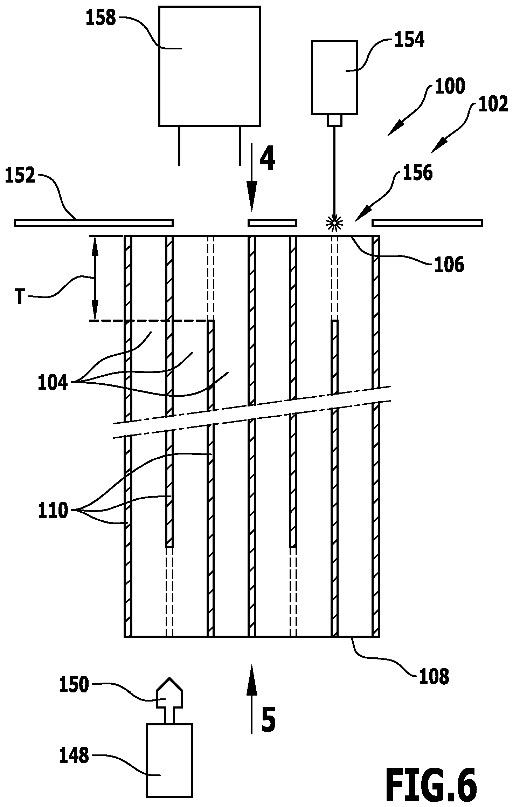

Die mittels der Bildaufnahmevorrichtung 144 und der Bildauswertungsvorrichtung 146 erzeugten Daten werden an eine, insbesondere CNC-gesteuerte, Fräsvorrichtung 148 weitergegeben (siehe Fig. 6).

Mittels der Fräsvorrichtung 148 werden die Aussparungen 116 in die Trennwände 110 gefräst.

Ein Fräskopf 150 der Fräsvorrichtung 148 weist dabei vorzugsweise einen Durchmesser auf, welcher im Wesentlichen der Breite B der Strömungskanäle 104 entspricht.

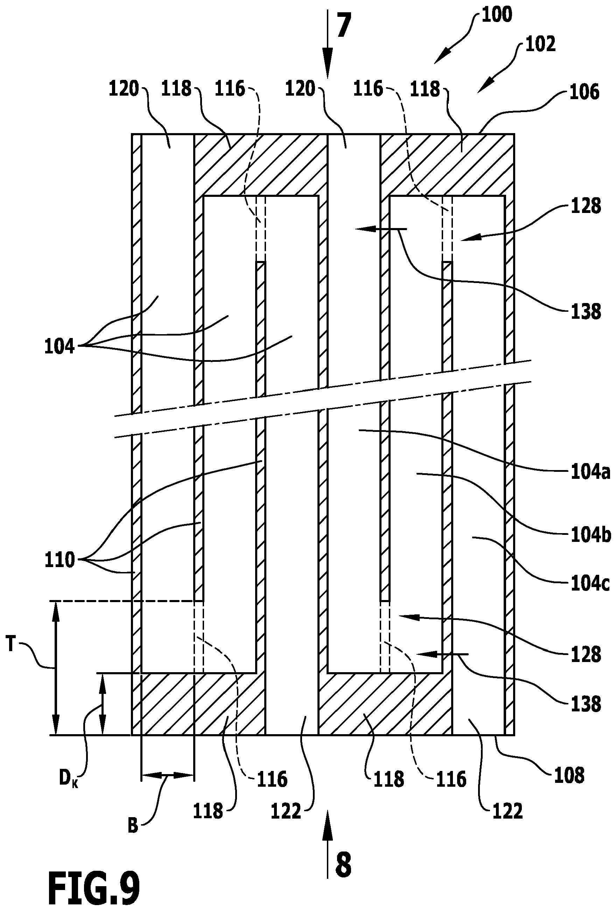

Die Ausfrästiefe T wird dabei vorzugsweise so festgelegt, dass sie mindestens der Summe aus der Breite B der Strömungskanäle 104 und der Dicke D_{K} der Kanalverschlüsse 118 entspricht (siehe Fig. 9).

Nach dem Einbringen der Aussparungen 116 wird der Grundkörper 102 gebrannt, beispielsweise bei ungefähr 1300°C. Hierdurch erhält der Grundkörper 102 insbesondere die für eine Katalysatorvorrichtung notwendigen mechanischen Eigenschaften.

In einem nächsten Schritt wird der Grundkörper 102 mit der katalytischen Beschichtung 112 versehen. Dies erfolgt vorzugsweise in einem Tauchverfahren, bei welchem eine edelmetallhaltige flüssige Masse aufgebracht wird.

Nach dem Trocknen des Grundkörpers 102 und einer Kalzinierung desselben bei ungefähr 400°C kann eine Weiterverarbeitung des Grundkörpers 102 erfolgen.

Wie insbesondere Fig. 6 zu entnehmen ist, werden die Eintrittseite 106 und zusätzlich auch die Austrittseite 108 mit einer Maske 152 versehen.

Die Maske 152 wird dabei dadurch hergestellt, dass eine durchsichtige Kunststofffolie auf die Eintrittseite 106 bzw. die Austrittseite 108 geklebt wird. Mittels der Bildaufnahmevorrichtung 144 und der Bildauswertungsvorrichtung 146 werden dann die Positionen der Aussparungen 116 und somit auch der Kanalverschlüsse 118 ermittelt. Die so erhaltenen Daten werden dazu verwendet, eine Laservorrichtung 154 zu steuern, um die Kunststofffolie an denjenigen Stellen wegzubrennen, an welchen die Kanalverschlüsse 118 angeordnet werden sollen. Hierdurch wird die Maske 152 mit den erforderlichen Öffnungen 156 erzeugt.

Mittels einer Füllvorrichtung 158, beispielsweise eines Keramikmassespenders, wird durch die Öffnungen 156 in der Maske 152 plastisches Material, insbesondere plastisches Keramikmaterial, in die durch die Öffnungen 156 in der Maske 152 zugänglichen Strömungskanäle 104 des Grundkörpers 102 eingebracht.

Das Material, welches eingebracht wird, entspricht vorzugsweise dem Material des Grundkörpers 102 und weist somit vorzugsweise im Wesentlichen den gleichen Wärmeausdehnungskoeffizienten auf.

Zur Verfestigung des Materials und somit zur Fertigstellung der Kanalverschlüsse 118 wird ein Trocknungsvorgang und ein Kalzinierungsvorgang bei ungefähr 500°C durchgeführt.

Anschließend können mehrere in dieser Art und Weise erstellte Grundkörper 102 zu größeren Verbünden (Blöcken) zusammengefasst, insbesondere verklebt, werden.

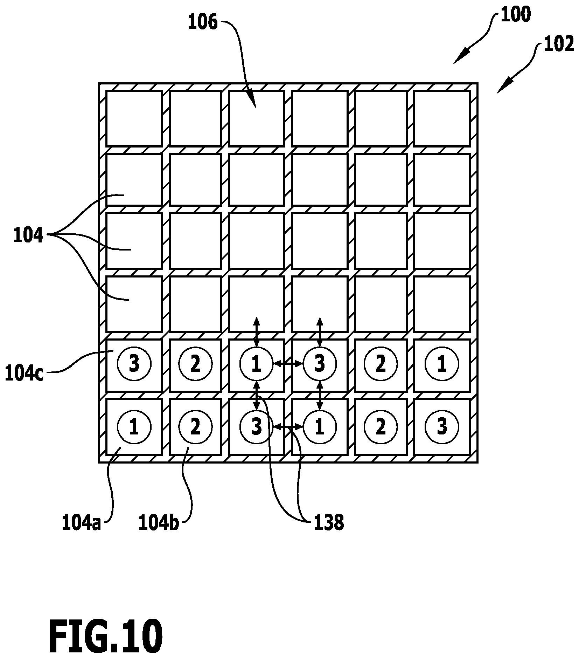

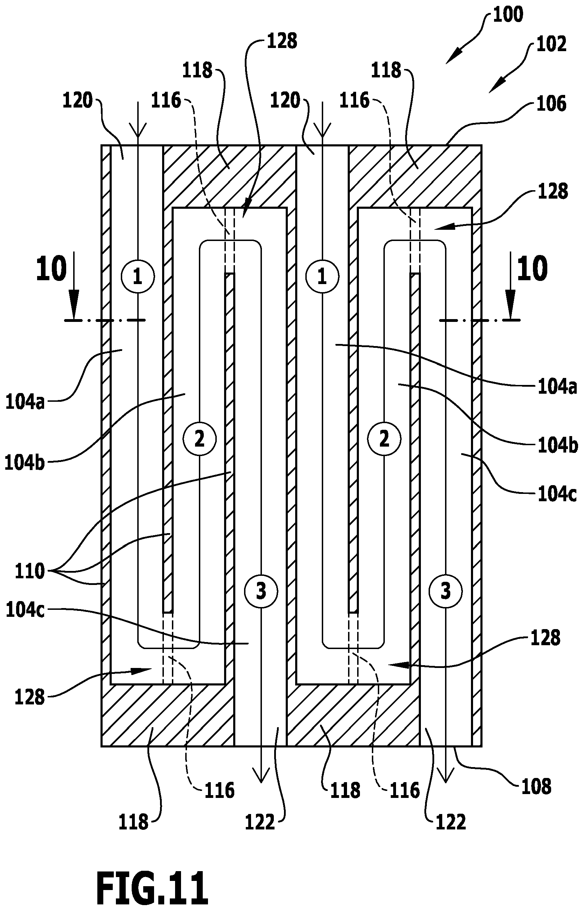

Wie insbesondere den Fig. 10 und 11 zu entnehmen ist, werden die Aussparungen 116 und die Kanalverschlüsse 118 vorzugsweise so angeordnet, dass die Strömungskanäle 104a, durch welche ein den Grundkörper 102 durchströmender Gasstrom in den Grundkörper 102 einströmt (in den Fig. 10 und 11 mit "1" markiert), und die Strömungskanäle 104c, durch welche der Gasstrom aus dem Grundkörper 102 herausströmt (in den Fig. 10 und 11 mit "3" markiert), zumindest abschnittsweise in einem Schachbrettmuster angeordnet.

Auf diese Weise kann eine Wärmeübertragung beispielsweise bei horizontaler Durchströmung sowohl in horizontaler als auch in vertikaler Wärmeübertragungsrichtung 138 senkrecht zur Durchströmungsrichtung 124 erfolgen.

Die zwischen den auf der Eintrittseite 106 bzw. der Austrittseite 108 offenen Strömungskanälen 104 (104a, 104c, "1", "3") angeordneten, beidseitig geschlossenen Strömungskanäle 104 (104b), welche in den Fig. 10 und 11 mit "2" markiert sind, sind spaltenweise angeordnet.

Das zumindest abschnittsweise schachbrettartige Muster der Strömungskanäle 104a, 104c, welche zur Eintrittseite 106 bzw. zur Austrittseite 108 des Grundkörpers 102 geöffnet sind, ergibt sich aus der zeilenweise alternierenden Anordnung der Strömungskanäle 104 mit den Aussparungen 116 und den Kanalverschlüssen 118. So wechseln sich Zeilen, in welchen die Strömungskanäle in der Reihenfolge 1-2-3-1-2-3 etc. angeordnet sind, mit Zeilen ab, in welchen die Anordnung 3-2-1-3-2-1 etc. ist.

Die Aussparungen 116 und die Kanalverschlüsse 118 auf der Eintrittseite 106 sind vorzugsweise gegengleich, insbesondere punktsymmetrisch, zu den Aussparungen 116 und den Kanalverschlüssen 118 auf der Austrittseite 108 angeordnet.

Die zweifache Strömungsumlenkung 128 pro Durchströmungsweg 114 ermöglicht das Einströmen des den Grundkörper 102 durchströmenden Gasstroms auf der Eintrittseite 106 und das Ausströmen desselben auf der Austrittseite 108, welche der Eintrittseite 106 gegenüberliegend angeordnet ist.

Grundsätzlich kann es in einem Katalysator Zustände geben, in welchen die erzeugte katalytische Wärmeleistung derart hoch ist, dass die Wärmeabfuhr nicht mehr gewährleistet ist und der Katalysator zerstört wird.

Bei dem beschriebenen Katalysator-Strömungskörper ist diese Gefahr sehr gering, da die katalytisch in einem Strömungskanal 104 erzeugte Wärme sofort an benachbarte Strömungskanäle 104 abgegeben wird. Ferner kann hierdurch ein Erlöschen des Katalysator-Strömungskörpers 100 vermieden werden, da der einströmende Gasstrom auch dann, wenn eine Gaseintrittstemperatur unter die katalytische Zündtemperatur absinkt, mittels des Wärmetransports zu den Eintrittsöffnungen 120 erhitzt wird, insbesondere über die katalytische Zündtemperatur erhitzt wird.

So kann beispielsweise ein mit verdampftem Dieselkraftstoff betriebener Katalysator-Strömungskörper 100, bei welchem eine katalytische Zündtemperatur von zwischen ungefähr 200 °C und ungefähr 250 °C erforderlich ist, nach dem Zünden bereits mit einer Gaseintrittstemperatur von ungefähr 80 °C betrieben werden, ohne dass der Katalysator-Strömungskörper 100 erlöscht, das heißt ohne, dass die Verbrennung des Dieselkraftstoffs in dem Katalysator-Strömungskörper 100 zum Erliegen kommt. Insbesondere bei der Verwendung des Katalysator-Strömungskörpers 100 zum Aufheizen einer weiteren Vorrichtung, beispielsweise eines (noch zu beschreibenden) Reinigungs-Strömungskörpers, kann hierdurch in jedem Fall eine geforderte Austrittstemperatur, beispielsweise eine Regenerationstemperatur zum Regenerieren eines Dieselruß-Partikel-Filters von 550 °C, erreicht werden.

Vorzugsweise verschieben sich heißere und kältere Zonen in dem Katalysator-Strömungskörper oszillierend. Hierdurch können vorzugsweise eine höhere Lebensdauer und eine bessere Gesamtaktivität des Katalysator-Strömungskörpers 100 erzielt werden.

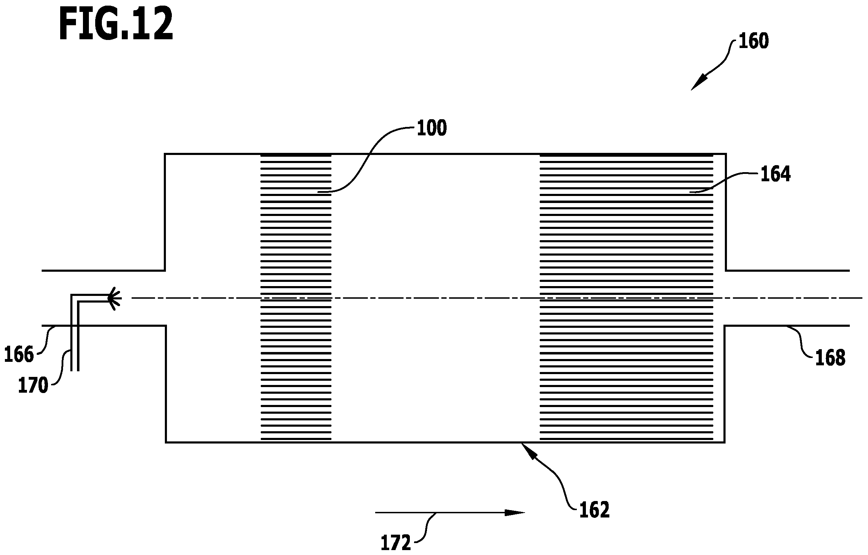

In Fig. 12 ist eine als Ganzes mit 160 bezeichnete Reinigungsvorrichtung dargestellt.

Die Reinigungsvorrichtung 160 umfasst eine Einhausung 162, in welcher ein Katalysator-Strömungskörper 100 und ein Reinigungs-Strömungskörper 164, insbesondere ein Dieselruß-Partikel-Filter, angeordnet sind.

Die Einhausung 162 ist mit einem Einlass 166 und einem Auslass 168 versehen.

Ferner ist eine Einbringeinrichtung 170 zum Einbringen eines Zusatzmaterials, insbesondere von Brennstoff, vorgesehen.

Bezüglich einer Durchströmungsrichtung 172 der Reinigungsvorrichtung 160 sind der Einlass 166, die Einbringeinrichtung 170, der Katalysator-Strömungskörper 100, der Reinigungs-Strömungskörper 164 und der Auslass 168 nacheinander angeordnet.

Ein durch die Reinigungsvorrichtung 160 geführter Gasstrom, insbesondere ein Abgasstrom einer dieselbetriebenen Brennkraftmaschine, kann folglich über den Einlass 166 der Reinigungsvorrichtung 160 zugeführt werden.

Mittels der Einbringeinrichtung 170 kann der Gasstrom beispielsweise mit zusätzlichem Brennstoff, insbesondere Dieselkraftstoff, angereichert werden.

Der Gasstrom wird dann durch den Katalysator-Strömungskörper 100 geführt und schließlich in dem Reinigungs-Strömungskörper 164 gereinigt, insbesondere werden hierbei Dieselruß-Partikel abgeschieden.

Der gereinigte Abgasstrom verlässt die Reinigungsvorrichtung 160 anschließend über den Auslass 168.

Die in Fig. 12 beschriebene Reinigungsvorrichtung 160 funktioniert wie folgt:
Im Laufe des Betriebs lagert sich in dem Reinigungs-Strömungskörper 164 nach und nach eine größere Menge von Dieselruß-Partikeln ab.

Wenn ein Strömungswiderstand durch diese Ablagerung zu groß wird, muss der Reinigungs-Strömungskörper 164 freigebrannt werden.

Dies erfolgt durch ein Erhitzen desselben mittels des Katalysator-Strömungskörpers 100.

Das in die Reinigungsvorrichtung 160 geführte Abgas wird hierzu beispielsweise mittels der Einbringeinrichtung 170 mit Brennstoff angereichert, welcher mittels des Katalysator-Strömungskörpers 100 zur Erzeugung von Wärme oxidiert wird.

Die mittels des Katalysator-Strömungskörpers 100 erzeugte Wärme führt zu einer starken Erhitzung des Reinigungs-Strömungskörpers 164, wodurch die darin abgeschiedenen Dieselruß-Partikel verbrannt werden. Der Reinigungs-Strömungskörper 164 wird hierdurch regeneriert und kann weiterverwendet werden.

Insbesondere durch die Verwendung von mäanderförmigen Durchströmungswegen 114 in dem Katalysator-Strömungskörper 100 (siehe insbesondere Fig. 1) kann ein zuverlässiges Erhitzen des Reinigungs-Strömungskörpers 164 und somit eine zuverlässige Regeneration desselben sowie ein zuverlässiger Betrieb der Reinigungsvorrichtung 160 ermöglicht werden.

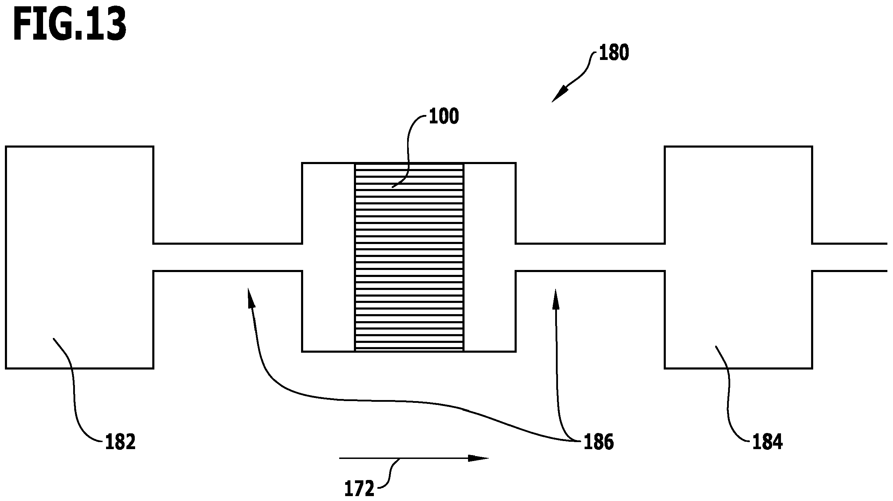

Eine in Fig. 13 dargestellte Wärmekraftmaschine 180 umfasst eine Verbrennungsvorrichtung 182, insbesondere einen Verbrennungsmotor, eine Turbinenvorrichtung 184, insbesondere eine Turboladervorrichtung, einen Katalysator-Strömungskörper 100 und eine Abgasströmungsführung 186.

Mittels der Abgasströmungsführung 186 sind die Verbrennungsvorrichtung 182, die Turbinenvorrichtung 184 und der Katalysator-Strömungskörper 100 fluidwirksam miteinander verbunden, so dass Abgas aus der Verbrennungsvorrichtung 182 direkt dem Katalysator-Strömungskörper 100 zugeführt, durch diesen hindurchgeführt und anschließend der Turbinenvorrichtung 184 zugeführt werden kann.

Insbesondere bei der Verwendung von Gas, insbesondere Erdgas, als Brennstoff für die Verbrennungsvorrichtung 182 und einem mageren Betrieb der Verbrennungsvorrichtung 182 kann ein unerwünschter Methanschlupf entstehen.

Die in Fig. 13 dargestellte Wärmekraftmaschine 180 ermöglicht die zuverlässige Entfernung von Methan aus dem Abgasstrom durch die Verwendung des Katalysator-Strömungskörpers 100.

Der Katalysator-Strömungskörper 100 ist hierzu beispielsweise mit Platin beschichtet, so dass Methan im Abgas mit einer Zündtemperatur von ungefähr 500 °C oxidiert werden kann.

Durch die Verwendung des Katalysator-Strömungskörpers 100, beispielsweise gemäß Fig. 1, kann auch bei einem Absinken der Abgastemperatur der Verbrennungsvorrichtung 182 unter 500 °C ein Erlöschen der Reaktion in dem Katalysator-Strömungskörper 100 durch die innere Wärmeübertragung vermieden werden.

Der Methangehalt im Abgas wird hierfür vorzugsweise so hoch gehalten, dass das System autotherm betrieben werden kann. Beispielsweise kann ein Methangehalt von ungefähr 500 ppm im Abgas eingestellt werden.

Die Anordnung des Katalysator-Strömungskörpers 100 vor der Turbinenvorrichtung 184 dient der Ausnutzung der höheren Abgastemperaturen zur zuverlässigen Verbrennung des Methans. Ferner kann hierdurch ein Wirkungsgrad des Gesamtsystems erhöht werden.

## Patentansprüche

1. Katalysator-Strömungskörper (100), umfassend einen Grundkörper (102), welcher Folgendes umfasst:
- eine Eintrittseite (106), auf welcher ein Fluidstrom in den Grundkörper (102) einströmen kann;
- eine der Eintrittseite (106) gegenüberliegende Austrittseite (108), auf welcher der Fluidstrom aus dem Grundkörper (102) austreten kann; und
- eine Mehrzahl von die Eintrittseite (106) mit der Austrittseite (108) verbindenden mäanderförmigen Durchströmungswegen (114),
- eine Mehrzahl von Strömungskanälen (104);
- Aussparungen (116) in Trennwänden (110) des Grundkörpers (102), welche die Strömungskanäle (104) voneinander trennen, so dass mindestens zwei benachbarte Strömungskanäle (104) in einem gemeinsamen Endbereich (130) der mindestens zwei benachbarten Strömungskanäle (104) innerhalb des Grundkörpers (102) fluidwirksam miteinander verbunden sind; und
- Kanalverschlüsse (118) im gemeinsamen Endbereich (130) zum fluiddichten Verschluss des gemeinsamen Endbereichs (130) unter Erhalt der fluidwirksamen Verbindung zwischen den mindestens zwei benachbarten Strömungskanälen (104) in dem gemeinsamen Endbereich (130),
wobei sämtliche Eintrittsöffnungen (120) des Katalysator-Strömungskörpers (100) auf der Eintrittseite (106) und sämtliche Austrittsöffnungen (122) des Katalysator-Strömungskörpers (100) auf der Austrittseite (108) angeordnet sind,
wobei die Aussparungen (116) so verteilt an dem Grundkörper (102) angeordnet sind, dass
a) auf einer Seite (106, 108) des Grundkörpers (102) jeweils zwei Strömungskanäle (104) mittels jeweils einer Aussparung (116) fluidwirksam miteinander verbunden sind; und
b) auf einer Seite (106, 108) des Grundkörpers (102) jeweils ein Paar (126) von mittels einer Aussparung (116) fluidwirksam miteinander verbundenen Strömungskanälen (104) von vier direkt an das Paar (126) von Strömungskanälen (104) angrenzenden Strömungskanälen (104) umgeben ist, welche auf dieser Seite (106, 108) des Grundkörpers (102) nicht mit weiteren Strömungskanälen (104) fluidwirksam verbunden sind.

2. Katalysator-Strömungskörper (100) nach Anspruch 1, **dadurch gekennzeichnet, dass** der Grundkörper (102) aus einem plastischen keramischen Material hergestellt ist, wobei als Ausgangsmaterial für den Grundkörper (102) ein Cordieritmaterial, welches Cordierit umfasst, vorgesehen ist.

3. Katalysator-Strömungskörper (100) nach einem der Ansprüche 1 oder 2, **dadurch gekennzeichnet, dass** die Kanalverschlüsse (118) Stopfen sind, welche zuvor offene Enden der Strömungskanäle (104) abdichten.

4. Katalysator-Strömungskörper (100) nach einem der Ansprüche 1 bis 3, **dadurch gekennzeichnet, dass** die Aussparungen (116) und/oder die Kanalverschlüsse (118) gemäß einem regelmäßigen Muster an dem Grundkörper (102) angeordnet sind.

5. Katalysator-Strömungskörper (100) nach einem der Ansprüche 1 bis 4, **dadurch gekennzeichnet, dass** die Aussparungen (116) und/oder die Kanalverschlüsse (118) so an dem Grundkörper (102) angeordnet sind, dass horizontal benachbarte Strömungskanäle (104) und vertikal benachbarte Strömungskanäle (104) im Betrieb des Katalysator-Strömungskörpers (100) in einander entgegengesetzten Durchströmungsrichtungen (124) durchströmt werden.

6. Katalysator-Strömungskörper (100) nach einem der Ansprüche 1 bis 5, **dadurch gekennzeichnet, dass**
a) der Grundkörper (102) auf beiden Seiten (106, 108) mit Aussparungen (116) und Kanalverschlüssen (118) versehen ist; und/oder
b) jeweils drei Strömungskanäle (104) mittels jeweils zweier Aussparungen (116), welche an einander gegenüberliegenden Endbereichen (130) der Strömungskanäle (104) angeordnet sind, fluidwirksam miteinander verbunden sind.

7. Katalysator-Strömungskörper (100) nach einem der Ansprüche 1 bis 6, **dadurch gekennzeichnet, dass** der Grundkörper (102) Spalten (140) und Zeilen (142) aus Strömungskanälen (104) aufweist, wobei die Aussparungen (116) und die Kanalverschlüsse (118) so an dem Grundkörper (102) angeordnet sind, dass die Strömungskanäle (104) jeder dritten Spalte (140) oder jeder dritten Zeile (142) von Strömungskanälen (104) beidseitig mit Kanalverschlüssen (118) versehen sind.

8. Katalysator-Strömungskörper (100) nach einem der Ansprüche 1 bis 7, **dadurch gekennzeichnet, dass** der Grundkörper (102) eine katalytische Beschichtung (112) umfasst.

9. Reinigungsvorrichtung (160) zur Reinigung eines Rohgasstroms, umfassend mindestens einen Katalysator-Strömungskörper (100) nach einem der Ansprüche 1 bis 8.

10. Wärmekraftmaschine (180), umfassend eine Verbrennungsvorrichtung (182), eine Turbinenvorrichtung (184), einen Katalysator-Strömungskörper (100) nach einem der Ansprüche 1 bis 8 und eine Abgasströmungsführung (186), mittels welcher aus der Verbrennungsvorrichtung (182) abgeführtes Abgas zunächst durch den Katalysator-Strömungskörper (100) hindurchführbar und anschließend der Turbinenvorrichtung (184) zuführbar ist.

11. Verwendung eines Katalysator-Strömungskörpers (100) nach einem der Ansprüche 1 bis 8 zur thermischen Umsetzung von Kohlenwasserstoffen, insbesondere von Methan.

## Claims

1. Catalyst flow element (100), comprising a main body (102) which comprises the following:
- an inlet side (106), on which a fluid stream may flow into the main body (102);
- an outlet side (108) opposite the inlet side (106), on which the fluid stream may exit from the main body (102); and
- a plurality of meandering through-flow paths (114) connecting the inlet side (106) with the outlet side (108).
- a plurality of flow channels (104);
- slots (116) in partition walls (110) of the main body (102), which separate the flow channels (104) from one another such that at least two adjacent flow channels (104) are connected together fluidically within the main body (102) in a common end region (130) of the at least two adjacent flow channels (104); and
- channel closures (118) in the common end region (130) for fluid-tight closure of the common end region (130) while maintaining the fluidic connection between the at least two adjacent flow channels (104) in the common end region (130),
wherein all inlet orifices (120) of the catalyst flow element (100) are arranged on the inlet side (106) and all outlet orifices (122) of the catalyst flow element (100) are arranged on the outlet side (108), wherein the slots (116) are arranged on the main body (102) distributed in such a way that
a) on one side (106, 108) of the main body (102) in each case two flow channels (104) are connected together fluidically by means of one slot (116); and
b) on one side (106, 108) of the main body (102) in each case one pair (126) of flow channels (104) connected together fluidically by means of one slot (116) is surrounded by four flow channels (104) which directly adjoin the pair (126) of flow channels (104) and are not connected fluidically with further flow channels (104) on this side (106, 108) of the main body (102).

2. Catalyst flow element (100) in accordance with Claim 1, **characterized in that** the main body (102) is made from a malleable ceramic material, wherein a cordierite material, which comprises cordierite, is provided as the starting material for the main body (102).

3. Catalyst flow element (100) in accordance with either of Claims 1 or 2, **characterized in that** the channel closures (118) are stoppers which seal previously open ends of the flow channels (104).

4. Catalyst flow element (100) in accordance with any one of Claims 1 to 3, **characterized in that** the slots (116) and/or the channel closures (118) are arranged on the main body (102) in a regular pattern.

5. Catalyst flow element (100) in accordance with any one of Claims 1 to 4, **characterized in that** the slots (116) and/or the channel closures (118) are arranged on the main body (102) in such a way that horizontally adjacent flow channels (104) and vertically adjacent flow channels (104) are flowed through in mutually opposed through-flow directions (124) when the catalyst flow element (100) is in operation.

6. Catalyst flow element (100) in accordance with any one of Claims 1 to 5, **characterized in that**
a) the main body (102) is provided on both sides (106, 108) with slots (116) and channel closures (118);
and/or
b) in each case three flow channels (104) are connected fluidically together by means of in each case two slots (116), which are arranged at mutually opposite end regions (130) of the flow channels (104).

7. Catalyst flow element (100) in accordance with any one of Claims 1 to 6, **characterized in that** the main body (102) comprises columns (140) and rows (142) of flow channels (104), wherein the slots (116) and the channel closures (118) are arranged on the main body (102) in such a way that the flow channels (104) of every third column (140) or every third row (142) of flow channels (104) are provided on both sides with channel closures (118).

8. Catalyst flow element (100) in accordance with any one of Claims 1 to 7, **characterized in that** the main body (102) comprises a catalytic coating (112).

9. Purification device (160) for purifying a crude gas stream, comprising at least one catalyst flow element (100) in accordance with any one of Claims 1 to 8.

10. Thermal engine (180), comprising a combustion device (182), a turbine device (184), a catalyst flow element (100) in accordance with any one of Claims 1 to 8, and an exhaust gas flow guide (186), by means of which exhaust gas removed from the combustion device (182) is configured to be firstly passed through the catalyst flow element (100) and then supplied to the turbine device (184).

11. Use of a catalyst flow element (100) in accordance with any one of Claims 1 to 8 for thermal conversion of hydrocarbons, in particular of methane.

## Revendications

1. Corps d'écoulement de catalyseur (100), comprenant un corps de base (102), lequel comprend ce qui suit :
- un côté d'entrée (106), sur lequel un flux de fluide peut affluer dans le corps de base (102) ;
- un côté de sortie (108) faisant face au côté d'entrée (106), sur lequel le flux de fluide peut sortir du corps de base (102) ; et
- une pluralité de voies d'écoulement (114) sinueuses reliant le côté d'entrée (106) au côté de sortie (108),
- une pluralité de canaux d'écoulement (104) ;
- des évidements (116) dans des parois de séparation (110) du corps de base (102), lesquels séparent les canaux d'écoulement (104) les uns des autres, de sorte qu'au moins deux canaux d'écoulement (104) adjacents sont reliés l'un à l'autre en communication fluidique dans une zone d'extrémité (130) commune des au moins deux canaux d'écoulement (104) adjacents à l'intérieur du corps de base (102), et
- des systèmes d'obturation de canaux (118) dans la zone d'extrémité (130) commune servant à l'obturation étanche aux fluides de la zone d'extrémité (130) commune en obtenant une liaison de communication fluidique entre les au moins deux canaux d'écoulement (104) adjacents dans la zone d'extrémité (130) commune,
dans lequel toutes les ouvertures d'entrée (120) du corps d'écoulement de catalyseur (100) sont disposées sur le côté d'entrée (106) et toutes les ouvertures de sortie (122) du corps d'écoulement de catalyseur (100) sont disposées sur le côté de sortie (108),
dans lequel les évidements (116) sont disposés de telle sorte de manière répartie au niveau du corps de base (102) que
a) respectivement deux canaux d'écoulement (104) sont reliés l'un à l'autre en communication fluidique au moyen de respectivement un évidement (116) sur un côté (106, 108) du corps de base (102) ; et
b) respectivement une paire (126) de canaux d'écoulement (104) reliés l'un à l'autre en communication fluidique au moyen d'un évidement (116) est entourée par quatre canaux d'écoulement (104) jouxtant directement la paire (126) de canaux d'écoulement (104) sur un côté (106, 108) du corps de base (102), lesquels ne sont pas reliés en communication fluidique à d'autres canaux d'écoulement (104) sur ledit côté (106, 108) du corps de base (102).

2. Corps d'écoulement de catalyseur (100) selon la revendication 1, **caractérisé en ce que** le corps de base (102) est fabriqué à partir d'un matériau en céramique plastique, dans lequel un matériau à base de cordiérite, qui comprend de la cordiérite, est prévu en tant que matériau de base pour le corps de base (102).

3. Corps d'écoulement de catalyseur (100) selon l'une quelconque des revendications 1 ou 2, **caractérisé en ce que** les systèmes d'obturation de canaux (118) sont des bouchons, lesquels étanchéifient des extrémités ouvertes au préalable des canaux d'écoulement (104).

4. Corps d'écoulement de catalyseur (100) selon l'une quelconque des revendications 1 à 3, **caractérisé en ce que** les évidements (116) et/ou les systèmes d'obturation de canaux (118) sont disposés selon un modèle régulier au niveau du corps de base (102).

5. Corps d'écoulement de catalyseur (100) selon l'une quelconque des revendications 1 à 4, **caractérisé en ce que** les évidements (116) et/ou les systèmes d'obturation de canaux (118) sont disposés de telle sorte au niveau du corps de base (102) que des canaux d'écoulement (104) horizontalement adjacents et des canaux d'écoulement (104) verticalement adjacents sont traversés par un flux, lors du fonctionnement du corps d'écoulement de catalyseur (100), dans des directions de traversée de flux (124) opposées les unes aux autres.

6. Corps d'écoulement de catalyseur (100) selon l'une quelconque des revendications 1 à 5, **caractérisé en ce que**
a) le corps de base (102) est pourvu sur les deux côtés (106, 108) d'évidements (116) et de systèmes d'obturation de canaux (118) ;
et/ou
b) respectivement trois canaux d'écoulement (104) sont reliés les uns aux autres en communication fluidique au moyen de respectivement deux évidements (116), qui sont disposés au niveau de zones d'extrémité (130) se faisant face les unes les autres des canaux d'écoulement (104).

7. Corps d'écoulement de catalyseur (100) selon l'une quelconque des revendications 1 à 6, **caractérisé en ce que** le corps de base (102) présente des colonnes (140) et des lignes (142) de canaux d'écoulement (104), dans lequel les évidements (116) et les systèmes d'obturation de canaux (118) sont disposés de telle sorte au niveau du corps de base (102) que les canaux d'écoulement (104) de chaque troisième colonne (140) ou de chaque troisième ligne (142) de canaux d'écoulement (104) sont pourvus de part et d'autre de systèmes d'obturation de canaux (118).

8. Corps d'écoulement de catalyseur (100) selon l'une quelconque des revendications 1 à 7, **caractérisé en ce que** le corps de base (102) comprend un revêtement catalytique (112).

9. Dispositif de nettoyage (160) servant à nettoyer un flux de gaz brut, comprenant au moins un corps d'écoulement de catalyseur (100) selon l'une quelconque des revendications 1 à 8.

10. Moteur thermique (180) comprenant un dispositif de combustion (182), un dispositif à turbine (184), un corps d'écoulement de catalyseur (100) selon l'une quelconque des revendications 1 à 8 et un système de guidage d'écoulement de gaz d'échappement (186), au moyen duquel des gaz d'échappement évacués du dispositif de combustion (182) peuvent être guidés d'abord à travers le corps d'écoulement de catalyseur (100) puis peuvent être amenés au dispositif à turbine (184).

11. Utilisation d'un corps d'écoulement de catalyseur (100) selon l'une quelconque des revendications 1 à 8 servant à transformer thermiquement des hydrocarbures, en particulier du méthane.
